(19)

**Europäisches Patentamt**
**European Patent Office**
**Office européen des brevets**

(11) **EP 4 715 676 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
**G06N 3/084** (2023.01)

(21) Application number: **23942901.2**

(22) Date of filing: **29.06.2023**

(52) Cooperative Patent Classification (CPC):
**G06N 3/084**

(86) International application number:
**PCT/CN2023/104201**

(87) International publication number:
**WO 2025/000392 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **DONG, Lei**
**Shenzhen, Guangdong 518129 (CN)**

• **TANG, Hao**
**Shenzhen, Guangdong 518129 (CN)**
• **WANG, Ting**
**Shenzhen, Guangdong 518129 (CN)**
• **GAO, Na**
**Shenzhen, Guangdong 518129 (CN)**
• **WEI, Dongdong**
**Shenzhen, Guangdong 518129 (CN)**
• **MA, Jianglei**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **MODEL TRAINING METHOD AND COMMUNICATION APPARATUS**

(57) A model training method and a communication apparatus are provided. The method includes: A communication apparatus receives first information, where the first information indicates an input data set of an $l^{th}$ layer of an intelligent model and a gradient accumulation factor set corresponding to the $l^{th}$ layer, and $l$ is a positive integer. The communication apparatus determines, based on the input data set of the $l^{th}$ layer and the gradient accumulation factor set corresponding to the $l^{th}$ layer, a gradient set corresponding to the $l^{th}$ layer, where one gradient accumulation factor in the gradient accumulation factor set is used to determine multiple gradients in the gradient set, and the gradient set is used to determine the intelligent model. This can reduce transmission overheads and improve resource utilization.

FIG. 6

**Description**

**TECHNICAL FIELD**

This application relates to the communication field, and more specifically, to a model training method and a communication apparatus.

**BACKGROUND**

With continuous development of technologies related to computing power, algorithm, and data, the three driving forces of artificial intelligence (artificial intelligence, AI)/machine learning (machine learning, ML), AI/ML technologies have sparked a new wave of technological revolution in human society. AI/ML technologies implement modeling and learning in complex and unknown environments, have great application potentials in channel prediction, intelligent signal generation and processing, network status tracking and intelligent scheduling, and network deployment optimization, are expected to promote future communication paradigm evolution and network architecture transformation, and are of great significance and value to the research of future mobile communication technologies.

A training process of an AI model may be jointly completed by multiple devices. For example, in distributed federated learning, multiple terminals may independently perform AI model training by using local sample data, and send model weights (weights) or gradients (gradients) obtained through training to a center server (center server). The center server performs aggregation (aggregate) processing on the received multiple model weights or gradients, and then delivers an aggregation result to the multiple terminals, so that the terminal performs next model training. The process is iterated, until the model converges. This can resolve time-consuming data collection caused when a single device independently performs model training, implement device resource (for example, data and processing capability) sharing, increase diversity of training data, and improve training performance.

However, in a distributed model training process, a model weight/gradient is transferred between devices, causing extremely high data transmission overheads. Especially in the case of application to a wireless communication network, an air interface resource is occupied, which may affect a normal communication service of a terminal.

**SUMMARY**

Embodiments of this application provide a model training method and a communication apparatus, to reduce transmission overheads and improve resource utilization.

According to a first aspect, a model training method is provided. The method may be performed by a communication device or an apparatus (such as a chip, a chip system, or a processor) configured in (or used in) the communication device, or may be implemented by a logical node, a logical module, or software that can implement a part of or the entire communication device. An example in which a second communication apparatus performs the method is used below for description.

The method includes: A second communication apparatus receives first information, where the first information indicates an input data set of an $l^{th}$ layer of an intelligent model and a gradient accumulation factor set corresponding to the $l^{th}$ layer, and $l$ is a positive integer. The second communication apparatus determines, based on the input data set of the $l^{th}$ layer and the gradient accumulation factor set corresponding to the $l^{th}$ layer, a gradient set corresponding to the $l^{th}$ layer. One gradient accumulation factor in the gradient accumulation factor set is used to determine multiple gradients in the gradient set, and the gradient set is used to determine the intelligent model.

According to the foregoing solution, when multiple communication apparatuses jointly perform model training, and a gradient set of a neuron layer needs to be transferred between communication apparatuses, an input data set and a corresponding gradient accumulation factor set that are obtained through decomposing the gradient set corresponding to the neuron layer may be transmitted, and a receiving apparatus may determine the gradient set based on the input data set and the gradient accumulation factor set. A combination of each gradient accumulation factor in the gradient accumulation factor set and the input data set may be used to determine multiple gradients in the gradient set. Compared with a manner of directly transmitting the gradient set, transmission overheads can be reduced and resource utilization can be improved for each time of training. A model training process including multiple training iterations can greatly reduce transmission overheads and improve resource utilization.

With reference to the first aspect, in some implementations of the first aspect, the method further includes: The second communication apparatus determines a weight set of the intelligent model based on the gradient set, where the gradient set includes a gradient corresponding to each weight in the weight set; and the second communication apparatus determines an updated intelligent model based on the weight set.

According to the foregoing solution, the second communication apparatus may determine the weight set of the intelligent model based on the gradient set, to determine an updated intelligent model obtained after a current training iteration.

With reference to the first aspect, in some implementations of the first aspect, the $l^{th}$ layer is a fully connected layer, the $l^{th}$ layer includes N nodes, an $(l+1)^{th}$ layer of the intelligent model includes M nodes, and N and M are positive integers greater than 1. The input data set of the $l^{th}$ layer includes N pieces of input data corresponding to the N nodes, and the gradient accumulation factor set corresponding to the $l^{th}$ layer includes M gradient accumulation factors corresponding to the M nodes, where the gradient set includes T gradients, and T is a product of N and M.

According to the foregoing solution, for a fully connected layer, if a first communication apparatus directly sends the gradient set to the second communication apparatus, M × N parameters (that is, T parameters) need to be transmitted. When M and N are greater than 2, M + N is less than M × N, reducing model parameter transmission overheads. The first communication apparatus may transmit model parameters at each layer of the intelligent model in this manner. Especially when each layer includes a large quantity of nodes and training is performed a large quantity of times, transmission overheads can be reduced to a greater extent.

With reference to the first aspect, in some implementations of the first aspect, that the second communication apparatus determines, based on the input data set of the $l^{th}$ layer and the gradient accumulation factor set corresponding to the $l^{th}$ layer, the gradient set corresponding to the $l^{th}$ layer includes: The second communication apparatus determines the T gradients in the gradient set based on input data of each node in the N nodes and a gradient accumulation factor corresponding to each node in the M nodes, where a gradient $g_{mn}$ in the T gradients is a product of input data of an $n^{th}$ node in the N nodes and a gradient accumulation factor corresponding to an $m^{th}$ node in the M nodes, n is a positive integer less than or equal to N, and m is a positive integer less than or equal to M.

With reference to the first aspect, in some implementations of the first aspect, the input data set of the $l^{th}$ layer includes input data of P channels. The $l^{th}$ layer includes Q convolution kernels, the Q convolution kernels correspond to Q channels of output data of the $l^{th}$ layer, and the gradient accumulation factor set corresponding to the $l^{th}$ layer includes Q gradient accumulation factor subsets corresponding to the Q convolution kernels. The gradient set includes R gradient subsets, the R gradient subsets include P gradient subsets corresponding to each of the Q convolution kernels, the P gradient subsets corresponding to each convolution kernel correspond to the P channels, P and Q are positive integers, and R is a product of Q and P.

According to the foregoing solution, for a convolution layer, the gradient accumulation factor set includes Q gradient accumulation factor subsets, the Q gradient accumulation factors are in one-to-one correspondence with Q convolution kernels, and gradients corresponding to P channels corresponding to a corresponding convolution kernel may be determined by combining each gradient accumulation factor subset and the input data set. Instead of transmitting the gradient set $g^l$, the first communication apparatus transfers the gradient accumulation factor set $\delta^l$, and the input data set $a^{l-1}$ that are obtained through decomposing gradients corresponding to the $l^{th}$ layer, reducing model parameter transmission overheads. The first communication apparatus may transmit model parameters at each layer of the intelligent model in this manner. Especially when a dimension of input data is small and training is performed a large quantity of times, transmission overheads can be reduced to a greater extent.

With reference to the first aspect, in some implementations of the first aspect, that the second communication apparatus determines the gradient set based on the input data set of the $l^{th}$ layer and the gradient accumulation factor set corresponding to the $l^{th}$ layer includes: The second communication apparatus determines, by performing a convolution operation, the R gradient subsets in the gradient set based on input data of each of the P channels and a gradient accumulation factor subset corresponding to each of the Q convolution kernels. A gradient subset $G_{qp}$ in the R gradient subsets is obtained, by performing a convolution operation, based on a $p^{th}$ channel in the P channels and a gradient accumulation factor corresponding to a $q^{th}$ convolution kernel in the Q convolution kernels.

With reference to the first aspect, in some implementations of the first aspect, the method further includes: The second communication apparatus sends the gradient set, where the gradient set is used to determine the intelligent model.

According to the foregoing solution, after determining the gradient set, the second communication apparatus may send the gradient set to the first communication apparatus, so that the first communication apparatus determines a weight set based on the gradient set, to determine an updated intelligent model, and performs next model training based on the updated intelligent model. Alternatively, the second communication apparatus may send, to the second communication apparatus, a weight set obtained based on the gradient set, so that the first communication apparatus determines an updated intelligent model based on the weight set, and performs next model training.

According to a second aspect, a model training method is provided. The method may be performed by a communication device or an apparatus (such as a chip, a chip system, or a processor) configured in (or used in) the communication device, or may be implemented by a logical node, a logical module, or software that can implement a part of or the entire communication device. An example in which a first communication apparatus performs the method is used below for description.

The method includes: A first communication apparatus performs a model training process of an intelligent model, and determines an input data set of an $l^{th}$ layer of the intelligent model and a gradient accumulation factor set corresponding to the $l^{th}$ layer, where $l$ is a positive integer. The first communication apparatus sends first information, where the first information indicates the input data set of the $l^{th}$ layer and the gradient accumulation factor set corresponding to the $l^{th}$ layer. One gradient accumulation factor in the gradient accumulation factor set is used to determine multiple gradients in a gradient set corresponding to the $l^{th}$ layer.

With reference to the second aspect, in some implementations of the second aspect, that the first communication apparatus determines the gradient accumulation factor set corresponding to the $l^{th}$ layer of the intelligent model includes: The first communication apparatus determines, based on a weight set of an $(l+1)^{th}$ layer of the intelligent model, a gradient accumulation factor set corresponding to the $(l+1)^{th}$ layer, and an output data set of the $l^{th}$ layer, the gradient accumulation factor set corresponding to the $l^{th}$ layer.

With reference to the second aspect, in some implementations of the second aspect, the intelligent model includes L layers, $l$ is less than or equal to L, and that the first communication apparatus determines the gradient accumulation factor set corresponding to the $l^{th}$ layer of the intelligent model includes: If $l$ is equal to L, the first communication apparatus determines, based on an output data set and a label set of an $L^{th}$ layer, a gradient accumulation factor set corresponding to the $L^{th}$ layer, where the label set is used to determine a weight set of the intelligent model.

With reference to the second aspect, in some implementations of the second aspect, the $l^{th}$ layer is a fully connected layer, the $l^{th}$ layer includes N nodes, the $(l+1)^{th}$ layer of the intelligent model includes M nodes, and N and M are positive integers greater than 1. The input data set of the $l^{th}$ layer includes N pieces of input data corresponding to the N nodes, and the gradient accumulation factor set corresponding to the $l^{th}$ layer includes M gradient accumulation factors corresponding to the M nodes, where the gradient set includes T gradients, and T is a product of N and M.

With reference to the second aspect, in some implementations of the second aspect, that the first communication apparatus determines, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer includes: The first communication apparatus determines, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a multiplication operation.

With reference to the second aspect, in some implementations of the second aspect, the input data set of the $l^{th}$ layer includes input data of P channels. The $l^{th}$ layer includes Q convolution kernels, the Q convolution kernels correspond to Q channels of output data of the $l^{th}$ layer, and the gradient accumulation factor set corresponding to the $l^{th}$ layer includes Q gradient accumulation factor subsets corresponding to the Q convolution kernels. The gradient set includes R gradient subsets, the R gradient subsets include P gradient subsets corresponding to each of the Q convolution kernels, the P gradient subsets corresponding to each convolution kernel correspond to the P channels, P and Q are positive integers, and R is a product of Q and P.

With reference to the second aspect, in some implementations of the second aspect, that the first communication apparatus determines, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer includes: The first communication apparatus determines, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a convolution operation.

According to a third aspect, a communication apparatus is provided. In a design, the apparatus may include a module corresponding to the method/operation/step/action according to the first aspect or any implementation of the first aspect. The module may be implemented by a hardware circuit, software, or a combination of a hardware circuit and software. In a design, the apparatus includes a transceiver unit, configured to receive first information, where the first information indicates an input data set of an $l^{th}$ layer of an intelligent model and a gradient accumulation factor set corresponding to the $l^{th}$ layer, and $l$ is a positive integer; and a processing unit, configured to determine, based on the input data set of the $l^{th}$ layer and the gradient accumulation factor set corresponding to the $l^{th}$ layer, a gradient set corresponding to the $l^{th}$ layer, where one gradient accumulation factor in the gradient accumulation factor set is used to determine multiple gradients in the gradient set, and the gradient set is used to determine the intelligent model.

With reference to the third aspect, in some implementations of the third aspect, the processing unit is further configured to determine a weight set of the intelligent model based on the gradient set, where the gradient set includes a gradient corresponding to each weight in the weight set. The processing unit is further configured to determine an updated intelligent model based on the weight set.

With reference to the third aspect, in some implementations of the third aspect, the $l^{th}$ layer is a fully connected layer, the $l^{th}$ layer includes N nodes, an $(l+1)^{th}$ layer of the intelligent model includes M nodes, and N and M are positive integers greater than 1.

The input data set of the $l^{th}$ layer includes N pieces of input data corresponding to the N nodes, and the gradient accumulation factor set corresponding to the $l^{th}$ layer includes M gradient accumulation factors corresponding to the M nodes, where the gradient set includes T gradients, and T is a product of N and M.

With reference to the third aspect, in some implementations of the third aspect, the processing unit is specifically configured to determine the T gradients in the gradient set based on input data of each node in the N nodes and a gradient accumulation factor corresponding to each node in the M nodes, where a gradient $g_{mn}$ in the T gradients is a product of input data of an $n^{th}$ node in the N nodes and a gradient accumulation factor corresponding to an $m^{th}$ node in the M nodes, n is a positive integer less than or equal to N, and m is a positive integer less than or equal to M.

With reference to the third aspect, in some implementations of the third aspect, the input data set of the $l^{th}$ layer includes input data of P channels. The $l^{th}$ layer includes Q convolution kernels, the Q convolution kernels correspond to Q channels of output data of the $l^{th}$ layer, and the gradient accumulation factor set corresponding to the $l^{th}$ layer includes Q gradient accumulation factor subsets corresponding to the Q convolution kernels. The gradient set includes R gradient subsets, the R gradient subsets include P gradient subsets corresponding to each of the Q convolution kernels, the P gradient subsets corresponding to each convolution kernel correspond to the P channels, P and Q are positive integers, and R is a product of Q and P.

With reference to the third aspect, in some implementations of the third aspect, the processing unit is specifically configured to determine, by performing a convolution operation, the R gradient subsets in the gradient set based on input data of each of the P channels and a gradient accumulation factor subset corresponding to each of the Q convolution kernels, where a gradient subset $G_{qp}$ in the R gradient subsets is obtained, by performing a convolution operation, based on a $p^{th}$ channel in the P channels and a gradient accumulation factor corresponding to a $q^{th}$ convolution kernel in the Q convolution kernels.

With reference to the third aspect, in some implementations of the third aspect, the transceiver unit is further configured to send the gradient set, where the gradient set is used to determine the intelligent model.

According to a fourth aspect, a communication apparatus is provided. In a design, the apparatus may include a module corresponding to the method/operation/step/action according to the second aspect or any implementation of the second aspect. The module may be implemented by a hardware circuit, software, or a combination of a hardware circuit and software. In a design, the apparatus includes a processing unit, configured to perform a model training process of an intelligent model, and determine an input data set of an $l^{th}$ layer of the intelligent model and a gradient accumulation factor set corresponding to the $l^{th}$ layer, where $l$ is a positive integer; and a transceiver unit, configured to send first information, where the first information indicates the input data set of the $l^{th}$ layer and the gradient accumulation factor set corresponding to the $l^{th}$ layer, and one gradient accumulation factor in the gradient accumulation factor set is used to determine multiple gradients in a gradient set corresponding to the $l^{th}$ layer.

With reference to the fourth aspect, in some implementations of the fourth aspect, the processing unit is specifically configured to determine, based on a weight set of an $(l+1)^{th}$ layer of the intelligent model, a gradient accumulation factor set corresponding to the $(l+1)^{th}$ layer, and an output data set of the $l^{th}$ layer, the gradient accumulation factor set corresponding to the $l^{th}$ layer.

With reference to the fourth aspect, in some implementations of the fourth aspect, the intelligent model includes L layers, $l$ is less than or equal to L, and if $l$ is equal to L, the processing unit is specifically configured to determine, based on an output data set and a label set of an $L^{th}$ layer, a gradient accumulation factor set corresponding to the $L^{th}$ layer, where the label set is used to determine a weight set of the intelligent model.

With reference to the fourth aspect, in some implementations of the fourth aspect, the $l^{th}$ layer is a fully connected layer, the $l^{th}$ layer includes N nodes, an $(l+1)^{th}$ layer of the intelligent model includes M nodes, and N and M are positive integers greater than 1. The input data set of the $l^{th}$ layer includes N pieces of input data corresponding to the N nodes, and the gradient accumulation factor set corresponding to the $l^{th}$ layer includes M gradient accumulation factors corresponding to the M nodes, where the gradient set includes T gradients, and T is a product of N and M.

With reference to the fourth aspect, in some implementations of the fourth aspect, the processing unit is specifically configured to determine, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a multiplication operation.

With reference to the fourth aspect, in some implementations of the fourth aspect, the input data set of the $l^{th}$ layer includes input data of P channels. The $l^{th}$ layer includes Q convolution kernels, the Q convolution kernels correspond to Q channels of output data of the $l^{th}$ layer, and the gradient accumulation factor set corresponding to the $l^{th}$ layer includes Q gradient accumulation factor subsets corresponding to the Q convolution kernels. The gradient set includes R gradient subsets, the R gradient subsets include P gradient subsets corresponding to each of the Q convolution kernels, the P gradient subsets corresponding to each convolution kernel correspond to the P channels, P and Q are positive integers, and R is a product of Q and P.

With reference to the fourth aspect, in some implementations of the fourth aspect, the processing unit is specifically configured to determine, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a convolution operation.

According to a fifth aspect, a communication apparatus is provided, including a processor. The processor is coupled to a memory, the memory is configured to store instructions, and the processor is configured to execute the instructions in the memory, to cause the communication apparatus to implement the method according to the first aspect or the second aspect and any possible implementation of the first aspect or the second aspect.

Optionally, the communication apparatus further includes a memory, and may be configured to execute instructions in the memory, to implement the method according to the first aspect or the second aspect and any possible implementation of the first aspect or the second aspect.

Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a communication device (for example, a terminal or a network device). When the communication apparatus is a communication device, the communication interface may be a transceiver or an input/output interface.

In another implementation, the communication apparatus is a chip configured in the communication device. When the communication apparatus is a chip configured in the communication device, the communication interface may be an input/output interface.

Optionally, the transceiver may be a transceiver circuit. Optionally, the input/output interface may be an input/output circuit.

According to a sixth aspect, a processor is provided, including an input circuit, an output circuit, and a processing circuit. The processing circuit is configured to: receive a signal by using the input circuit, and transmit a signal by using the output circuit, to cause the processor to perform the method according to the first aspect or the second aspect and any possible implementation of the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit serves as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program is run, a computer is caused to perform the method according to the first aspect or the second aspect and any possible implementation of the first aspect or the second aspect.

According to an eighth aspect, a computer-readable storage medium is provided. The computer-readable storage medium stores a computer program (which may also be referred to as code or instructions). When the computer program is run on a computer, the computer is caused to perform the method according to the first aspect or the second aspect and any possible implementation of the first aspect or the second aspect.

According to a ninth aspect, a communication system is provided, including at least one communication apparatus according to the third aspect and at least one communication apparatus according to the fourth aspect.

According to a tenth aspect, a chip is provided, including at least one processor and a communication interface. The communication interface is configured to receive a signal input to the chip or a signal output from the chip. The processor communicates with the communication interface, and implements the method according to the first aspect or the second aspect and any possible implementation of the first aspect or the second aspect by using a logic circuit or by executing a code instruction.

It may be understood that, for beneficial effects of features corresponding to the first aspect in the second aspect to the tenth aspect, refer to related descriptions in the first aspect. Details are not repeatedly described again.

## BRIEF DESCRIPTION OF DRAWINGS

FIG. 1 is a block diagram of a communication system applicable to an embodiment of this application;

FIG. 1A is another block diagram of a communication system applicable to an embodiment of this application;

FIG. 2 is a diagram of fully connected layers of a neural network according to this application;

FIG. 3 is a diagram of a convolution layer of a neural network according to this application;

FIG. 4 is a schematic flowchart of a model training process according to this application;

FIG. 5 is a diagram of joint model training according to this application;

FIG. 6 is a schematic flowchart of a model training method according to this application;

FIG. 6A is a diagram of an intelligent model including a fully connected layer according to this application;

FIG. 7 is another schematic flowchart of a model training method according to this application;

FIG. 8 is a diagram of a structure of a communication apparatus according to this application;

FIG. 9 is another diagram of a structure of a communication apparatus according to this application; and

FIG. 10 is still another diagram of a structure of a communication apparatus according to this application.

## DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may be used to describe that there are three relationships between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" are not intended to limit a quantity and an execution sequence, and the terms such as "first" and "second" are not intended to limit a definite difference. In embodiments of this application, the term like "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding. In embodiments of this application, "at least one (type)" may alternatively be described as "one (type) or more (types)", and "multiple (types)" may be two (types), three (types), four (types), or more (types). This is not limited in embodiments of this application.

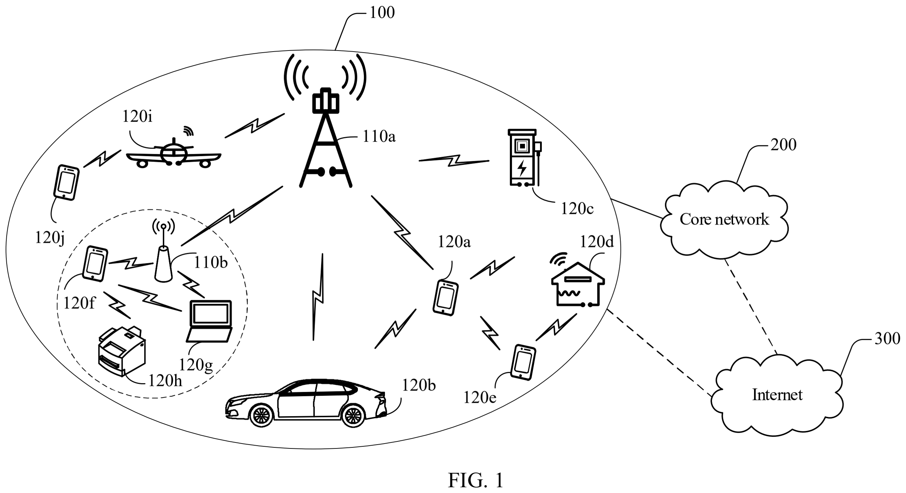

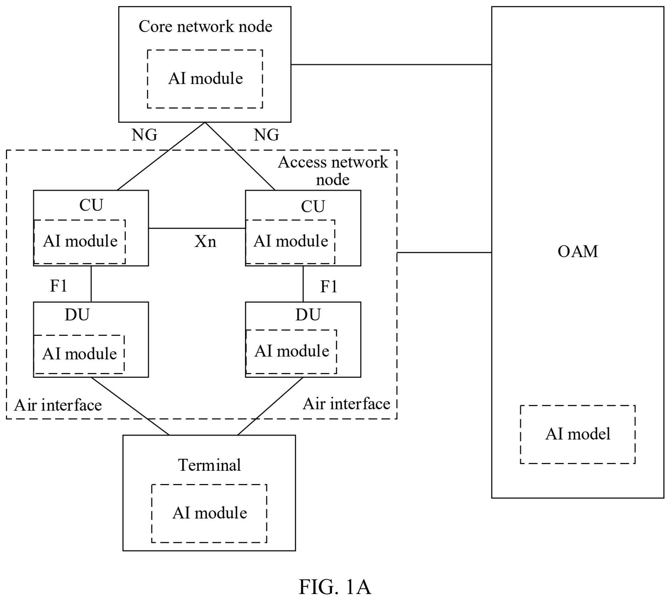

FIG. 1 is a diagram of an architecture of a communication system 1000 to which this application is applicable. As shown in FIG. 1, the communication system includes a radio access network (radio access network, RAN) 100 and a core network (core network, CN) 200. Optionally, the communication system 1000 may further include an internet 300. The radio access network 100 may include at least one access network node (for example, 110a and 110b in FIG. 1), and may further include at least one terminal (for example, 120a to 120j in FIG. 1). The terminal is connected to the access network node in a wireless communication manner. The access network node is connected to the core network in a wireless communication or wired communication manner. The core network device and the access network node may be different physical devices that are independent, or may be a same physical device that integrates functions of the core network device and functions of the access network node. Alternatively, there may be another possible case: For example, functions of the access network node and a part of functions of the core network device may be integrated into one physical device, and another physical device implements a remaining part of the functions of the core network device. Physical existence forms of the core network device and the access network node are not limited in this application. Terminals may be connected to each other in a wired or wireless manner. Access network nodes may be connected to each other in a wired or wireless manner. FIG. 1 is merely a diagram. The communication system may further include another network device, for example, may further include a wireless relay device and a wireless backhaul device.

The access network node may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network node in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the access network node may be a module or unit that implements a part of functions of a base station, for example, may be a central unit (central unit, CU), a distributed unit (distributed unit, DU), a central unit-control plane (CU-control plane, CU-CP) module, or a central unit-user plane (CU-user plane, CU-UP) module. The access network node may be a macro base station (for example, 110a in FIG. 1), may be a micro base station or an indoor base station (for example, 110b in FIG. 1), or may be a relay node, a donor node, or the like. A specific technology and a specific device form that are used by the access network node are not limited in this application. The 5G system may also be referred to as a new radio (new radio, NR) system.

In this application, an apparatus configured to implement functions of an access network node may be an access network node, or may be an apparatus that can support an access network node in implementing the functions, for example, a chip system, a hardware circuit, a software module, or a combination of a hardware circuit and a software module. The apparatus may be installed in the access network node, or may be used together with the access network node. In this application, the chip system may include a chip, or may include a chip and another discrete component. For ease of description, the following describes the technical solutions provided in this application by using an example in which an apparatus configured to implement functions of an access network node is an access network node, and optionally, the access network node is a base station.

The terminal may alternatively be referred to as a terminal device, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D) communication, vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, or the like. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in this application.

In this application, an apparatus configured to implement functions of a terminal may be a terminal, or may be an apparatus that can support a terminal in implementing the functions, for example, a chip system, a hardware circuit, a software module, or a combination of a hardware circuit and a software module. The apparatus may be installed in the terminal or may be used together with the terminal. For ease of description, the following describes the technical solutions provided in this application by using an example in which an apparatus configured to implement functions of a terminal is a terminal, and optionally, the terminal is UE.

The base station and/or the terminal may be stationary or mobile. The base station and/or the terminal may be deployed on the land, including an indoor or outdoor device, a handheld device, or a vehicle-mounted device; may be deployed on the water; or may be deployed on an airplane in the air, a balloon, and an artificial satellite. An environment/a scenario in which the base station and the terminal are located is not limited in this application. The base station and the terminal may be deployed in a same environment/scenario or different environments/scenarios. For example, the base station and the terminal are both deployed on the land. Alternatively, the base station is deployed on the land, and the terminal is deployed on the water. Examples are not enumerated.

The roles of the base station and the terminal may be relative. For example, the helicopter or uncrewed aerial vehicle 120i in FIG. 1 may be configured as a mobile base station; and for terminals 120j accessing the radio access network 100 through 120i, the terminal 120i is a base station. However, for the base station 110a, 120i may be a terminal, to be specific, 110a and 120i may communicate with each other according to a wireless air interface protocol. Alternatively, 110a and 120i communicate with each other according to an interface protocol between base stations. In this case, for 110a, 120i is also a base station. Therefore, both the base station and the terminal may be collectively referred to as communication apparatuses (or communication devices), 110a and 110b in FIG. 1 may be referred to as communication apparatuses having functions of the base station, and 120a to 120j in FIG. 1 may be referred to as communication apparatuses having functions of the terminal.

Optionally, the protocol layer structure between the access network node and the terminal may include an artificial intelligence (artificial intelligence, AI) layer, used to transmit data related to an AI function.

In this application, an independent network element (for example, referred to as an AI entity, an AI network element, an AI node, or an AI device) may be introduced to the communication system shown in FIG. 1, to implement an AI-related operation. The AI network element may be directly connected to a base station, or may be indirectly connected to a base station through a third-party network element. Alternatively, the AI network element may be an independently disposed network element in the communication system, for example, may be a core network element such as an access and mobility management function (access and mobility management function, AMF) network element or a user plane function (user plane function, UPF) network element. Alternatively, the AI network element may be built in a network element in the communication system, or an AI entity (or may be referred to as an AI module or another name) is configured in a network element in the communication system to implement an AI-related operation. Optionally, the network element configured with the AI entity may be a base station, a core network device, operation, administration, and maintenance (operation, administration and maintenance, OAM), or the like. The OAM is configured to operate, administer, and/or maintain a core network device (operation, administration, and maintenance of the core network device), and/or is configured to operate, administer, and/or maintain an access network node (operation, administration, and maintenance of the access network node).

Optionally, to match and support the AI, the terminal or the terminal chip may include an AI entity, configured to implement an AI-related function.

Optionally, in this application, the AI entity may also have another name, for example, an AI module or an AI unit, and is mainly configured to implement an AI function (or referred to as an AI-related operation). A specific name of the AI entity is not limited in this application.

In this application, an intelligent model may be referred to as an AI model, and the AI model is a specific method for implementing an AI function. The AI model represents a mapping relationship between an input and an output of the model. The AI model may be a neural network, a linear regression model, a decision tree model, a clustering (singular value decomposition, SVD) model, or another machine learning model. The AI model may be referred to as an intelligent model, a model, or another name for short. This is not limited. The AI-related operation may include at least one of the following: data collection, model training, model information release, model test (or referred to as model verification), model reasoning (or referred to as model inference, inference, prediction, or the like), inference result release, or the like.

FIG. 1A is another diagram of an architecture of a communication system to which this application is applicable. As shown in FIG. 1A, network elements in the communication system may be connected through an interface. For example, a core network node and an access network node shown in FIG. 1A may be connected through an NG interface, and access network nodes may be connected to each other through an Xn interface. Network elements in the communication system may be connected to each other through an air interface (air interface). For example, an access network node may be connected to a terminal through an air interface. One or more AI modules are disposed in one or more of these network element nodes, for example, the core network node, the access network node (RAN node), the terminal, or the OAM (for clarity, FIG. 1A shows only one AI module in each node). The access network node in FIG. 1 may serve as an independent RAN node, or may include multiple RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of a neural network, a connection relationship between layers, a weight value of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One output may be obtained through inference by using one model, where the output includes one or more parameters. Learning processes, training processes, or inference processes of different models may be deployed on different nodes or devices, or may be deployed on a same node or device.

The communication apparatus (for example, a first communication apparatus and/or a second communication apparatus) provided in embodiments of this application may be a network device, for example, the access network node, the server, or the base station described above. The communication apparatus (for example, the first communication apparatus and/or the second communication apparatus) provided in embodiments of this application may alternatively be the terminal described above.

The solutions provided in embodiments of this application may be applied to various application scenarios, such as virtual reality (virtual reality, VR), augmented reality (augmented reality, AR), industrial control, industrial wireless sensor network (industrial wireless sensor network, IWSN), self driving, telemedicine, smart grid, smart city (smart city), video surveillance (video surveillance), smart retail, and/or smart home (smart home).

Before the method in this application is described, some knowledge related to artificial intelligence is first briefly described.

1. Artificial intelligence AI

The artificial intelligence enables a machine to have a learning ability and accumulate experience, so that issues such as natural language understanding, image recognition, and/or chess playing that may be addressed by humans through experience can be addressed. For example, a machine can use software and hardware of a computer to simulate some intelligent behavior of a human. To implement artificial intelligence, a machine learning (machine learning, ML) method or another method may be used. This is not limited in this application.

2. Training (training) or learning

The training is a process of processing an AI model (also referred to as a training model). In this processing process, the model is enabled to perform a specific task by optimizing a weighted value (referred to as a weight) in the model.

A training method for the AI model includes but is not limited to supervised learning, unsupervised learning, reinforcement learning, transfer learning, and the like. Unsupervised learning may also be referred to as non-supervised learning.

In terms of supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through supervised learning may include linear mapping or non-linear mapping. A learning task may be classified into a classification task and a regression task based on a type of a label.

In terms of unsupervised learning, an internal pattern of a sample is explored autonomously by using an algorithm based on a collected sample value. For a specific type of algorithm of unsupervised learning, a sample is used as a supervisory signal. In other words, a model learns a mapping relationship between samples, which is referred to as self-supervised learning. During training, a model parameter is optimized by calculating an error between a predicted value of the model and the sample. Self-supervised learning may be used for signal compression and decompression restoration. Common algorithms include an autoencoder, a generative adversarial network, and the like.

Reinforcement learning is different from supervised learning, and is an algorithm that learns a problem-solving policy by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. The goal of reinforcement learning is also to learn a mapping relationship between an environment status and an optimal decision action. However, a label of a "correct action" cannot be obtained in advance. Therefore, a network cannot be optimized by calculating an error between an action and a "correct action". Reinforcement learning training is implemented through iterative interaction with the environment.

During AI model training, a loss function may be defined. The loss function describes a gap or a difference between an output value of the AI model and an ideal target value. A training process of the AI model is a process of adjusting a weight of the AI model to make a value of the loss function less than a threshold or meet a target requirement.

3. Inference

The inference refers to performing data processing by using a trained AI model (where the trained model may be referred to as an inference model). Actual data is input into the inference model for processing, to obtain a corresponding inference result. The inference may also be referred to as prediction or decision-making, and the inference result may also be referred to as a prediction result, a decision-making result, or the like.

4. Neural network (neural network, NN)

The neural network is a specific implementation of machine learning in AI, and the neural network is a network structure that simulates behavior features of an animal neural network for information processing. The structure of the neural network includes a large quantity of nodes (referred to as neurons) that are connected to each other. The neural network is based on a specific operation model, and processes information through learning and training based on input information. According to the general approximation theorem, the neural network can theoretically approximate any continuous function, so that the neural network has the capability of learning any mapping. Therefore, the neural network can accurately perform abstract modeling for a complex high-dimension problem. That is, the AI model may be implemented by using a neural network.

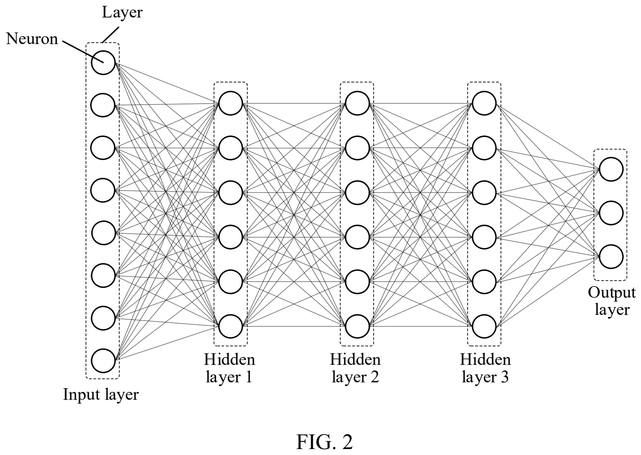

The neural network is usually a multi-layer structure, and includes multiple layers. Each layer may include one or more neurons, and one layer may be referred to as a neuron layer or a network layer. A depth of the neural network is a quantity of layers included in the neural network, and a quantity of neurons included in each layer may be referred to as a width of the layer. A neural network includes an input layer, a hidden layer, and an output layer. The input layer is responsible for receiving an input signal, the output layer is responsible for outputting a calculation result of the neural network, and the hidden layer is responsible for complex functions such as feature expression. The function of the hidden layer is represented by a weight and a corresponding activation function. FIG. 2 is a diagram of fully connected layers of a neural network. A 1st layer in the neural network is an input layer, and the input layer includes eight neurons. Starting from a next layer of the input layer, that is starting from a 2nd layer, there are three hidden layers, a hidden layer 1, a hidden layer 2, and a hidden layer 3. Each hidden layer includes six neurons, and the quantity of neurons may vary between different hidden layers. This is not limited in this application. A last layer of the neural network is an output layer, which includes three neurons. A fully connected layer means that all neurons between two adjacent layers are connected. Because one neuron at one layer is connected to each neuron at a next layer, a quantity of weights between two adjacent layers is equal to a product of quantities of neurons at the two layers. As shown in FIG. 2, the quantity of weights between the input layer and the hidden layer 1 is 48, the quantity of weights between the hidden layer 1 and the hidden layer 2 is 36, the quantity of weights between the hidden layer 2 and the hidden layer 3 is 36, and the quantity of weights between the hidden layer 3 and the output layer is 18.

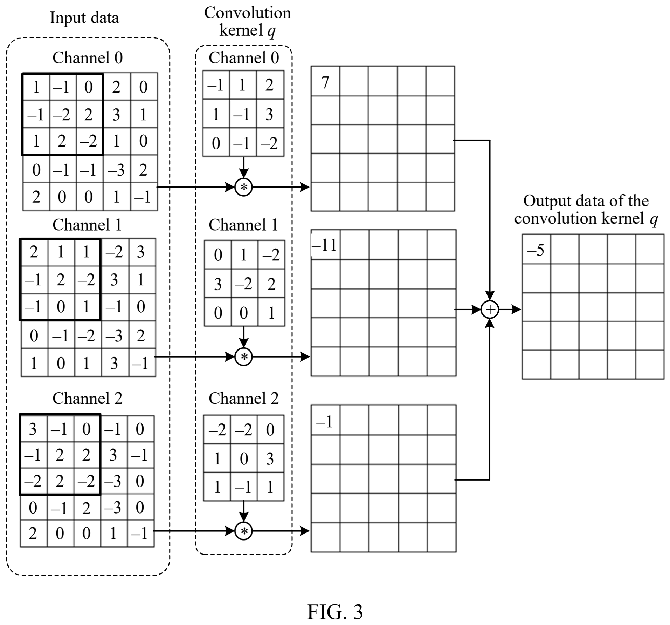

The neural network may further include a convolution layer. The convolution layer extracts an important feature of data in a weight value sharing (or referred to as weight sharing) manner. The convolution layer may implement a partially connected neural network, and the quantity of weights can be reduced compared with the fully connected layer. Input data of one convolution layer may include at least one channel, one convolution layer may include at least one convolution kernel, each convolution kernel corresponds to one channel of output data, and a data amount of channels of the output data of the convolution layer is the same as a quantity of convolution kernels included in the convolution layer. As shown in FIG. 3, input data of a convolution layer includes three channels, for example, a channel 0, a channel 1, and a channel 2 of the input data, and a dimension of data of each channel is $5 \times 5$. The convolution kernel may include Q convolution kernels, and Q is a positive integer. The Q convolution kernels include a convolution kernel $q$, and $1 \leq q \leq Q$. Each convolution kernel includes three channels, for example, a channel 0, a channel 1, and a channel 2 of the convolution kernel $q$, that are in one-to-one correspondence with the three channels of the input data. A dimension of each channel is $3 \times 3$. After convolution is performed on a channel of the convolution kernel q and a corresponding channel of the input data to obtain a convolution result, convolution results of channels of the convolution kernel $q$ are added to obtain output data of the convolution kernel $q$. Output data of the convolution layer includes Q channels, the Q channels are in one-to-one correspondence with the Q convolution kernels, and one of the Q channels is the output data of the convolution kernel q.

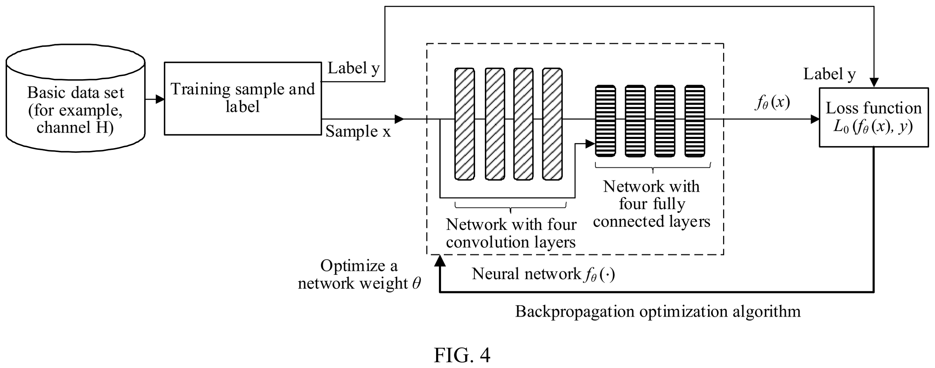

FIG. 4 is a diagram of a training process of an intelligent model. In the example shown in FIG. 4, the intelligent model is a neural network. The neural network $f_\theta(\cdot)$ includes four convolution layers and four fully connected layers. An AI entity may obtain training data from a basic data set (for example, a set of channel data). The training data may include a training sample (or referred to as sample data) and a label. A sample x is used as an input and is processed by the neural network $f_\theta(\cdot)$ to output an inference result. This process is referred to as a forward propagation process of the sample. A loss function calculates an error between the inference result and the label. The AI entity may perform gradient backpropagation by using a backpropagation optimization algorithm (which may be referred to as a model optimization algorithm) based on the error obtained by using the loss function, to optimize a weight $\theta$ of the neural network. The neural network is trained by using a large amount of training data, so that training of the neural network is completed after a difference between an output of the neural network and a label is less than a preset value.

It should be noted that the training process shown in FIG. 4 is described by using a training manner of supervised learning as an example. The supervised learning is based on a sample and a label, and model training is implemented by using a loss function. Unsupervised learning may also be used in the training process of the intelligent model, and an algorithm is used to learn an internal pattern of a sample, to complete training of the intelligent model based on the sample. Reinforcement learning may also be used in the training process of the intelligent model, and a reward signal fed back by an environment is obtained through interaction with the environment, to learn a problem-solving policy and optimize the model. A model training method and a model type are not limited in this application.

The trained AI model can execute inference tasks. After actual data is input to the AI model for processing, a corresponding inference result is obtained.

5. Federated learning

The federated learning is a distributed AI model training method. A training process is jointly performed by multiple apparatuses based on local data, instead of being performed by one apparatus. This can resolve time-consuming data collection caused during centralized AI model training, implement apparatus resource sharing, increase diversity of training data, and improve training performance. In addition, because the apparatus does not need to transmit local data, for some privacy data, privacy security problems can also be reduced.

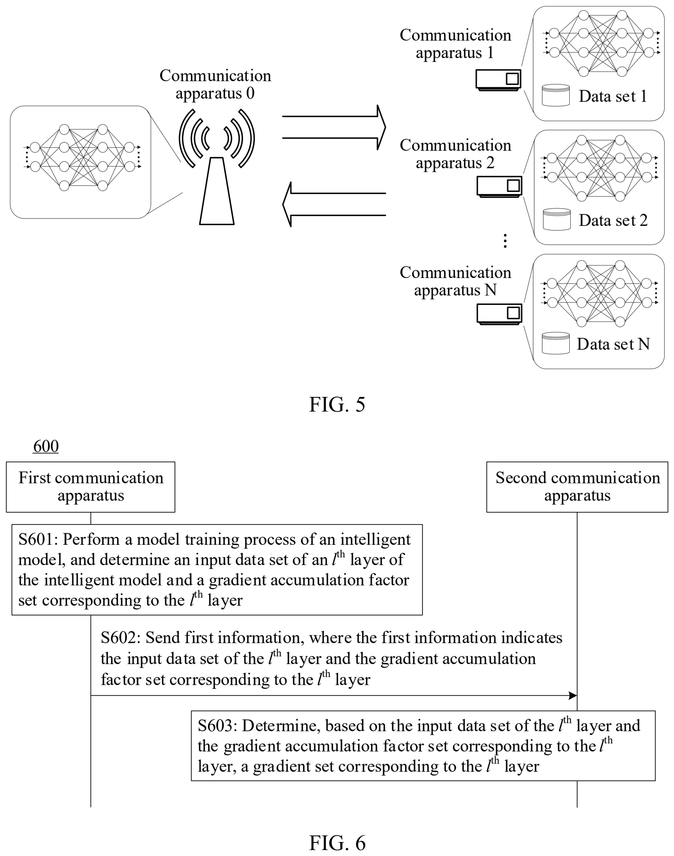

As shown in FIG. 5, a communication apparatus 0, a communication apparatus 1, a communication apparatus 2, ..., and a communication apparatus N may jointly perform model training. The communication apparatus 0 may provide another communication apparatus (for example, one or more of the communication apparatuses 1, 2, ..., and N) with a service for executing an AI task, and/or the communication apparatus 0 may jointly complete an AI task with another communication apparatus. However, this application is not limited thereto.

For example, at least one communication apparatus shown in FIG. 5 may perform federated learning. The communication apparatus 0 may serve as a central apparatus that provides a model parameter (for example, a weight, or a gradient used to determine a weight) for each communication apparatus. The communication apparatus 0, the communication apparatus 1, the communication apparatus 2, ..., and the communication apparatus N may serve as distributed apparatuses and obtain a model parameter from a central apparatus. After a model is updated based on the model parameter, an updated model is separately trained by using a local data set. For example, the communication apparatus 1 trains the model by using a local data set 1, the communication apparatus 2 trains the model by using a local data set 2, and the communication apparatus N trains the model by using a local data set N. After performing model training, the multiple communication apparatuses send training results of the current training to the central node. For example, the training result includes a model weight, a gradient corresponding to a weight, or the like. The central apparatus obtains the training results from the multiple communication apparatuses, combines the training results of the multiple communication apparatuses, updates the model parameter based on the combined training result, and notifies each communication apparatus. Each communication apparatus performs next model training, and the foregoing process is repeated until a training end condition is met, to complete model training.

The following describes some specific application scenarios of federated learning. For example, multiple image collection devices perform federated learning model training on an image recognition model by using image data collected by the multiple image collection devices respectively. After federated learning is completed, the image recognition model may recognize an item in an image based on an input image. For another example, in the Internet of Vehicles, a camera, a positioning system, and an inertial measurement unit (inertial measurement unit, IMU) of a vehicle separately collect different types of data, and these apparatuses may perform federated learning model training on a traffic condition inference model by using the collected data. After completing the federated learning, the vehicle may input collected environmental data into the traffic condition inference model, to obtain a traffic condition obtained through model inference, to assist the vehicle in driving, and the like.

Applying federated learning to a wireless communication system can significantly improve performance of the communication system. In most scenarios, the network device and the terminal also need to use a matching artificial intelligence model to improve wireless communication performance. The network device and one or more terminals may complete model training in a federated learning manner. For example, model training may be performed, by using the federated learning, on an encoder model that implements channel state information (channel state information, CSI) feedback compression, so that a trained model is used for CSI feedback compression.

Applying artificial intelligence to the field of communication often involve complex nonlinear function fitting. An intelligent model usually has a large scale, for example, a large quantity of model layers and a large quantity of model weights. For example, a convolutional neural network (convolutional neural network, CNN) of an encoder model that implements CSI feedback compression may include 15 layers of neurons. A residual network (ResNet) widely used in the AI field includes 34 layers of neurons. For example, a quantity of weights/gradients of ResNet-20 reaches 269,722. A visual geometry group (visual geometry group, VGG) neural network includes 19 layers of neurons. For example, a quantity of weights/gradients of a VGG-16 model reaches 14,728,266. For a large-scale AI model, a quantity of weights/gradients may reach millions or even tens of millions. When multiple communication apparatuses jointly perform model training (for example, federated learning), a model weight/gradient is transferred between communication apparatuses, causing extremely high data transmission overheads. Especially in the case of application to a wireless communication network, an air interface resource is occupied, which may affect a normal communication service of a terminal. Therefore, to facilitate application of joint model training to a communication network for improved communication performance, a problem of parameter (for example, weight/gradient) transmission overheads further needs to be resolved.

This application proposes that, based on gradient derivation in a model training process, a gradient set corresponding to one layer of an intelligent model may be decomposed into a gradient accumulation factor set and an input data set. One gradient accumulation factor in the gradient accumulation factor set may be combined with the input data set, to determine multiple gradients in the gradient set. When multiple communication apparatuses jointly perform model training, the communication apparatus transfers the gradient accumulation factor set and the input data set, instead of transferring the gradient set, so that transmission overheads can be reduced, and communication resource utilization can be improved.

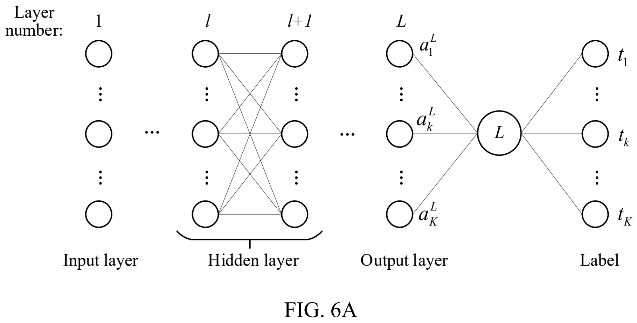

FIG. 6 is a schematic flowchart of a model training method 600 according to an embodiment of this application. In the method 600, a first communication apparatus and a second communication apparatus may jointly perform intelligent model training.

S601: The first communication apparatus performs a model training process of an intelligent model, and determines an input data set of an $l^{th}$ layer of the intelligent model and a gradient accumulation factor set corresponding to the $l^{th}$ layer.

The intelligent model may be referred to as an AI model, an ML model, an AI/ML model, or a neural network. A specific name of the intelligent model is not limited in this application.

The model training process of the intelligent model performed by the first communication apparatus includes forward propagation of a training sample (or referred to as sample data) and backpropagation of a gradient. The forward propagation of the training sample includes: using the training sample as input data, inputting the training sample to an input layer of the intelligent model, and obtaining output data output by an output layer through transfer at each layer of the intelligent model, that is, an output result of current training of the intelligent model. The first communication apparatus calculates an error between the output result and a label by using a loss function, and determines, through gradient backpropagation, a gradient corresponding to each layer.

In an implementation, the $l^{th}$ layer of the intelligent model is a fully connected layer, the $l^{th}$ layer includes $N$ nodes, an $(l+1)^{th}$ layer includes $M$ nodes, and $N$ and $M$ are positive integers greater than 1. An output $a^l$ of forward propagation of the $l^{th}$ layer may be represented as follows:

$$a^l = \sigma(z^l) = \sigma(W^l a^{l-1} + b^l) \qquad (1)$$

A dimension of $a^l$ is $M \times 1$, that is, $a^l$ includes $M$ pieces of data corresponding to the $M$ nodes of the $(l+1)^{th}$ layer, where the M pieces of data are $M$ *pieces* of output data of the $l^{th}$ layer, and are $M$ *pieces* of input data of the $(l+1)^{th}$ layer. $a^l$ is an output data set of the $l^h$ layer with processing using an activation function $\sigma$. $z^l$ is an output data set of the $l^{th}$ layer without processing using the activation function $\sigma$. $a^{l-1}$ is an output data set of an $(l-1)^{th}$ layer with processing using the activation function $\sigma$, that is, is the input data set of the l$^{th}$ layer. A dimension of $a^{l-1}$ is $N \times 1$, which includes N pieces of data corresponding to the N nodes of the l$^{th}$ layer. $W^l$ is a weight set between the l$^{th}$ layer and the $(l+1)^{th}$ layer, a dimension of $W^l$ is $M \times N$, $b^l$ is a bias of a weighted sum of input data, and a dimension of $b^1$ is $M \times 1$.

When the gradient is backpropagated to the $l^{th}$ layer, the gradient corresponding to the $l^{th}$ layer may be represented as follows:

$$g^l = \delta^l \left( \sigma(z^{l-1}) \right)^T = \delta^l (a^{l-1})^T \qquad (2)$$

$g^l$ is a gradient set corresponding to the $l^{th}$ layer, one gradient in the gradient set corresponds to one weight in the weight set $W^l$ of the $l^h$ layer, one gradient may be used to determine a weight corresponding to the gradient, and a dimension of $g^l$ is $M \times N$. $\delta^l$ is the gradient accumulation factor set corresponding to the l$^{th}$ layer, $\delta^l = \frac{\partial L}{\partial z^l}$ is obtained by calculating a partial derivative of the loss function $L$ with respect to $z^l$, and a dimension of $\delta^l$ is M $\times$ 1. $(x)^T$ represents a transposition of x. Specifically, the foregoing Formula (2) may be represented as follows:

$$g^l = \begin{bmatrix} g^l_{11} & g^l_{12} & \cdots & g^l_{1N} \\ g^l_{21} & g^l_{22} & \cdots & g^l_{2N} \\ \vdots & \vdots & \ddots & \vdots \\ g^l_{M1} & g^l_{M2} & \cdots & g^l_{MN} \end{bmatrix} = \begin{bmatrix} \delta^l_1 \\ \delta^l_2 \\ \vdots \\ \delta^l_M \end{bmatrix} \begin{bmatrix} a^{l-1}_1 & a^{l-1}_2 & \cdots & a^{l-1}_N \end{bmatrix} \qquad (2-1)$$

If the first communication apparatus performs model training and transfers a gradient obtained through model training to the second communication apparatus, for the l$^{th}$ layer, a quantity of gradients to be transmitted by the first communication apparatus is $T = M \times N$. It can be learned from the foregoing Formula (2-1) that a gradient set of each layer may be decomposed into a gradient accumulation factor set and an input data set that correspond to the layer. Each gradient accumulation factor in the gradient accumulation factor set and the input data set may be combined to determine $N$ gradients in the gradient set. A gradient $g^l_{mn}$ is a product of a gradient accumulation factor $\delta^l_m$ corresponding to an m$^{th}$ node of the $(l+1)^{th}$ layer and input data $a^{l-1}_n$ corresponding to an n$^{th}$ node of the $l^{th}$ layer, where $1 \leq m \leq M$, and $1 \leq n \leq N$.

If the first communication apparatus transmits the gradient accumulation factor set and the input data set that correspond to the $l^{th}$ layer instead of transmitting the gradient set, the quantity of parameters to be transmitted by the first communication apparatus is $M + N$. When $M$ and $N$ are greater than 2, $M + N$ is less than $M \times N$, and model parameter transmission overheads can be reduced. The first communication apparatus may transmit model parameters at each layer of the intelligent model in this manner. Especially when each layer includes a large quantity of nodes and training is performed a large quantity of times, transmission overheads can be reduced to a greater extent.

In another implementation, the $l^{th}$ layer of the intelligent model is a convolution layer, an input data set of the l$^{th}$ layer includes input data of P channels, the $l^{th}$ layer includes Q convolution kernels, and P and Q are positive integers. An output a$^l$ of forward propagation of the $l^{th}$ layer may be represented as follows:

$$a^l = \sigma(z^l) = \sigma(conv(W^l, a^{l-1}) + b^l) \tag{3}$$

conv(x, y) represents convolution of x and y. $a^l$ is an output data set of the $l^{th}$ layer with processing using an activation function $\sigma$. $z^l$ is an output data set of the $l^{th}$ layer without processing using the activation function $\sigma$. $a^{l-1}$ is output data of an $(l-1)^{th}$ layer with processing using the activation function, and is the input data of the $l^{th}$ layer. $a^{l-1}$ includes input data of P channels. If a dimension of input data of each channel is $h_i^l \times w_i^l$, a dimension of $a^{l-1}$ may be denoted as $P \times h_i^l \times w_i^l$. $W^l$ includes weights of Q convolution kernels, each of the Q convolution kernels includes weights of P channels, and the weights of the P channels are in one-to-one correspondence with the P channels of the input data set. If a dimension of a channel of a convolution kernel is $h_c^l \times w_c^l$, a dimension of $W^l$ may be denoted as $Q \times P \times h_c^l \times w_c^l$. Convolution is performed on weights of P channels of each of the Q convolution kernels and input data of corresponding P channels, and summation is performed, to obtain output data of one channel corresponding to each convolution kernel, and output data of Q channels corresponding to the Q convolution kernels. Therefore, the output data set $a^l$ of the $l^{th}$ layer includes the output data of the Q channels. If a dimension of output data of each channel is $h_o^l \times w_o^l$, a dimension of $a^l$ may be denoted as $Q \times h_o^l \times w_o^l$. For a processing process of a specific convolution layer, refer to the foregoing description of the example shown in FIG. 3. Details are not described herein again.

A dimension $h_o^l \times w_o^l$ of output data of a channel is related to a dimension $h_i^l \times w_i^l$ of input data, amounts $h_p^l$ and $w_p^l$ of data to be padded during convolution, a dimension $h_c^l \times w_c^l$, of a channel of a convolution kernel, and a convolution step s. The amounts $h_p^l$ and $w_p^l$ of data to be padded may be controlled, so that a dimension of input data of a channel of a convolution layer is the same as a dimension of output data of a channel. For example, the parameters meet the following Formula (4) and Formula (5):

$$h_o^l = \left\lfloor \frac{h_i^l + 2 \times h_p^l - h_c^l}{s} \right\rfloor + 1 = h_i^l \tag{4}$$

$$w_o^l = \left\lfloor \frac{w_i^l + 2 * w_p^l - w_c^l}{s} \right\rfloor + 1 = w_i^l \tag{5}$$

$\lfloor x \rfloor$ represents rounding down x.

When the gradient is backpropagated to the $l^{th}$ layer, the gradient corresponding to the $l^{th}$ layer may be represented as follows:

$$g^l = conv\left(\delta^l, (\sigma(z^{l-1}))^T\right) = conv(\delta^l, (a^{l-1})^T) \tag{6}$$

$g^l$ is a gradient set corresponding to the $l^{th}$ layer, one gradient in the gradient set corresponds to one weight in the weight set $W^l$ of the $l^{th}$ layer, a dimension of $g^l$ is $Q \times P \times h_c^l \times w_c^l$, $\delta^l$ is the gradient accumulation factor set corresponding to the $l^{th}$ layer, $\delta^l = \frac{\partial L}{\partial z^l}$ is obtained by calculating a partial derivative of the loss function L with respect to $z^l$, and a dimension of $\delta^l$ is $Q \times h_o^l \times w_o^l$.

The gradient accumulation factor set $\delta^l$ corresponding to the $l^{th}$ layer includes Q gradient accumulation factor subsets corresponding to the Q convolution kernels. Each gradient accumulation factor subset may be combined with the input data set to determine a gradient corresponding to P channels of a convolution kernel corresponding to the gradient accumulation factor subset. In an example of a gradient accumulation factor subset $\delta_q^l$ corresponding to a convolution kernel q and an input data set $a^{l-1}$, and a dimension of $\delta_q^l$ being $h_o^l \times w_o^l$, a gradient $g_q^l$ corresponding to P channels corresponding to the convolution kernel q may be determined, where a dimension of $g_q^l$ is $P \times h_c^l \times w_c^l$.

Therefore, after performing model training, instead of transmitting the gradient set $g^l$, the first communication apparatus may transfer, to the second communication apparatus, the gradient accumulation factor set $\delta^l$ and the input data set $a^{l-1}$ that are obtained through decomposing gradients corresponding to the $l^{th}$ layer, reducing model parameter transmission overheads. The first communication apparatus may transmit model parameters at each layer of the intelligent model in this manner. Especially when a dimension of input data is small and training is performed a large quantity of times, transmission overheads can be reduced to a greater extent.

S602: The first communication apparatus sends first information to the second communication apparatus, where the first information indicates the input data set of the $l^{th}$ layer and the gradient accumulation factor set corresponding to the $l^{th}$ layer.

Correspondingly, the second communication apparatus receives the first information from the first communication apparatus, and determines, based on the first information, the input data set of the $l^{th}$ layer and the gradient accumulation factor set corresponding to the $l^{th}$ layer, so that the second communication apparatus may determine, in S603 based on the input data set of the $l^{th}$ layer and the gradient accumulation factor set corresponding to the $l^{th}$ layer, the gradient set that corresponds to the $l^{th}$ layer and that is obtained after the first communication apparatus performs current training on the intelligent model.

Specifically, the first information may indicate an input data set of each layer of the intelligent model and a gradient accumulation factor set corresponding to each layer, so that the second communication apparatus may determine, in S603 based on the input data set of each layer and the gradient accumulation factor set corresponding to each layer, a gradient set corresponding to each layer obtained after the first communication apparatus performs current training on the intelligent model.

S603: The second communication apparatus determines, based on the input data set of the $l^{th}$ layer and the gradient accumulation factor set corresponding to the $l^{th}$ layer, the gradient set corresponding to the $l^{th}$ layer.

For example, the second communication apparatus may obtain, according to the foregoing Formula (2) and based on the input data set $a^{l-1}$ of the $l^{th}$ layer and the gradient accumulation factor set $\delta^l$ corresponding to the $l^{th}$ layer, the gradient set $g^l$ that corresponds to the $l^{th}$ layer and that is obtained after the first communication apparatus performs the current training on the intelligent model.

Optionally, the second communication apparatus may determine the weight set $W^l$ of the $l^{th}$ layer based on the gradient set $g^l$ corresponding to the $l^{th}$ layer. The second communication apparatus may determine an updated intelligent model based on the weight set.

Specifically, the second communication apparatus may obtain, from the first information, the input data set corresponding to each layer of the intelligent model and the gradient accumulation factor set corresponding to each layer, and the second communication apparatus may determine, based on the first information, the gradient set corresponding to each layer. Optionally, the second communication apparatus may determine the weight set of each layer based on the gradient set corresponding to each layer, to determine the updated intelligent model based on the weight set of each layer.

According to the foregoing solution of this application, when multiple communication apparatuses jointly perform model training, and a gradient set or a weight set of a neuron layer needs to be transferred between communication apparatuses, an input data set and a corresponding gradient accumulation factor set that are obtained through decomposing the gradient set corresponding to the neuron layer may be transmitted, and a receiving apparatus may determine the gradient set or the weight set based on the input data set and the gradient accumulation factor set. Transmission overheads can be reduced and resource utilization can be improved by using this manner of model parameter transmission.

As shown in Table 1, an example in which the intelligent model is a neural network including a fully connected layer is used, and quantities of neurons included at five layers of a neural network 1 are 2, 25, 50, 25, and 2. After the first communication apparatus performs model training once, if a gradient set corresponding to each layer obtained through training is to be transmitted, a quantity of gradients (that is, a quantity of parameters) to be transmitted is 2600 (that is, $2{\times}25+25{\times}50+50{\times}25+25{\times}2$). If the gradients are decomposed and a gradient accumulation factor set and an input data set that correspond to each layer are transmitted, a quantity of model parameters (including gradient accumulation factors and input data) to be transmitted is 204 (that is, 2+25+25+50+50+25+25+2). It can be learned that transmission overheads after training once are reduced to less than one tenth of the original transmission overheads. For a neural network that includes a large quantity of neurons at each layer, quantities of neurons included at five layers of a neural network 2 shown in Table 1 are 16, 512, 1024, 1024, and 16. After the first communication apparatus performs model training once, if a gradient set corresponding to each layer obtained through training is to be transmitted, a quantity of gradients (that is, a quantity of parameters) to be transmitted is 1597440. If the gradients are decomposed and a gradient accumulation factor set and an input data set that correspond to each layer are transmitted, a quantity of model parameters (including gradient accumulation factors and input data) to be transmitted is 5184. It can be learned that according to the solution provided in this application, transmission overheads can be greatly reduced after model training once, and transmission overheads can be reduced to a greater extent and resource utilization can be improved after model training multiple times.

Table 1

| Intelligent model | Quantity of neurons | | | | | Overheads of gradient set transmission (quantity of parameters) | Overheads of gradient accumulation factor set and input data set transmission (quantity of parameters) |
|---|---|---|---|---|---|---|---|
| | Layer 0 | Layer 1 | Layer 2 | Layer 3 | Layer 4 | | |
| Neural network 1 | 2 | 25 | 50 | 25 | 2 | 2600 | 204 |
| Neural network 2 | 16 | 512 | 1024 | 1024 | 16 | 1597440 | 5184 |

The foregoing describes that the first communication apparatus may indicate, by using the first information, the input data set of the $l^{th}$ layer of the intelligent model and the gradient accumulation factor set corresponding to the $l^{th}$ layer, so that the second communication apparatus can determine, based on the first information, the gradient set or the weight set corresponding to the $l^{th}$ layer of the intelligent model. In an implementation, the first communication apparatus may indicate, by using the first information, an input data set of each layer of the intelligent model and a gradient accumulation factor set corresponding to each layer, so that the second communication apparatus can determine, based on the first information, a gradient set corresponding to each layer of the intelligent model.

This application further provides another implementation. The first information may indicate an input data set of each layer of the intelligent model and a gradient accumulation factor component set corresponding to each layer. A gradient accumulation factor component in the gradient accumulation factor component set is a component of a gradient accumulation factor in the gradient accumulation factor set, and the gradient accumulation factor component set and the gradient accumulation factor set have a same dimension.

If the $l^{th}$ layer of the intelligent model is a fully connected layer, the first communication apparatus may determine, based on a gradient factor set $\delta^{l+1}$ and a weight set $W^{l+1}$ that correspond to the $(l+1)^{th}$ layer, and an input data set $a^l$ of the $(l+1)^{th}$ layer (that is, the output data set $a^l$ of the $l^{th}$ layer) by using a partial derivative operation and/or a multiplication operation, the gradient accumulation factor set corresponding to the $l^{th}$ layer, which for example, may be represented as follows:

$$\delta^l = (W^{l+1})^T \delta^{l+1} \odot \sigma'(z^l) \tag{7}$$

$\sigma'(z^l)$ represents a derivative of $\sigma(z^l)$, that is, a derivative of the output data set $a^l$ of the $l^{th}$ layer, and $\odot$ represents a Hadamard product. $(W^{l+1})^T\delta^{l+1}$ is the gradient accumulation factor component set of the gradient accumulation factor set $\delta^l$, and a dimension of $(W^{l+1})^T\delta^{l+1}$ is $M \times 1$.

For example, the intelligent model is shown in FIG. 6A. An activation function $\sigma(x) = \frac{1}{1+e^x}$ is used as an example, and a derivative $\sigma'(x)$ of the activation function may be represented as follows:

$$\sigma'(x) = \frac{d}{dx}\sigma(x) = \frac{d}{dx}\left(\frac{1}{1+e^x}\right) = \sigma(x)[1 - \sigma(x)]$$

The gradient set of the $l^{th}$ layer may be represented as:

$$g^l = \delta^l(a^{l-1})^T = \begin{bmatrix} \delta_1^l \\ \delta_2^l \\ \vdots \\ \delta_M^l \end{bmatrix} \begin{bmatrix} a_1^{l-1} & a_2^{l-1} & \cdots & a_N^{l-1} \end{bmatrix}$$

In the foregoing Formula (7), a dimension of $W^{l+1}$ is $H \times M$, $H$ is a quantity of nodes included in an $(l+2)^{th}$ layer, a dimension of $\delta^{l+1}$ is $H \times 1$, and the following may be obtained:

$$\begin{bmatrix} \delta_1^l \\ \delta_2^l \\ \vdots \\ \delta_M^l \end{bmatrix} = \begin{bmatrix} w_{11}^{l+1} & w_{12}^{l+1} & \cdots & w_{1M}^{l+1} \\ w_{21}^{l+1} & w_{22}^{l+1} & \cdots & w_{2M}^{l+1} \\ \vdots & \vdots & \ddots & \vdots \\ w_{H1}^{l+1} & w_{H2}^{l+1} & \cdots & w_{HM}^{l+1} \end{bmatrix}^T \begin{bmatrix} \delta_1^{l+1} \\ \delta_2^{l+1} \\ \vdots \\ \delta_H^{l+1} \end{bmatrix} \odot \sigma'(x)$$

$\sigma(z^l) = a^l$ , and $\sigma'(z_m^l) = \sigma(z_m^l)[1 - \sigma(z_m^l)] = a_m^l[1 - a_m^l]$ . Therefore, the following is provided:

$$\delta_m^l = a_m^l[1 - a_m^l] \sum_{h=1}^{H} w_{hm}^{l+1} \delta_h^{l+1}$$

*m is* an integer greater than or equal to 1 and less than or equal to *M*.

If *l* is equal to *L,* that is, if the *l*th layer is the output layer of the intelligent model, the first communication apparatus determines, based on an output data set and a label set of an *L*th layer, a gradient accumulation factor set corresponding to the *L*th layer, where the label set is used to determine a weight set of the intelligent model.

In the example shown in FIG. 6A, a gradient set of the *L*th layer may be represented as:

$$g^L = \delta^L (a^{L-1})^T = \begin{bmatrix} \delta_1^L \\ \delta_2^L \\ \vdots \\ \delta_K^L \end{bmatrix} \begin{bmatrix} a_1^{L-1} & a_2^{L-1} & \cdots & a_J^{L-1} \end{bmatrix}$$

*J* is a quantity of nodes included in an $(L\text{-}1)^{th}$ layer.

$$\delta^L = (a^L - t) \odot \sigma'(z^l)$$

t is the label set, and has a dimension K $\times$ 1. In this case, $\sigma'(z_k^l) = \sigma(z_k^l)[1 - \sigma(z_k^l)] = a_k^l[1 - a_k^l]$ . Therefore, the following is provided:

$$\delta_k^L = a_k^L[1 - a_k^L](a_k^L - t_k)$$

*k* is an integer greater than or equal to 1 and less than or equal to *K*.

If the *l*th layer of the intelligent model is a convolution layer, the first communication apparatus may determine, based on a gradient factor set $\delta^{l+1}$ and a weight set $W^{l+1}$ that correspond to the $(l+1)^{th}$ layer, and an input data set $a^l$ of the $(l+1)^{th}$ layer (that is, the output data set $a^l$ of the *l*th layer) by using a partial derivative operation and/or a convolution operation, the gradient accumulation factor set corresponding to the *l*th layer, which for example, may be represented as follows:

$$\delta^l = \text{conv}(rot180(W^{l+1})^T, \delta^{l+1}) \odot \sigma'(z^l) \tag{8}$$

$conv(rot180(W^{l+1})^T, \delta^{l+1})$ is the gradient accumulation factor component set of the gradient accumulation factor set $\delta^l$, and the gradient accumulation factor. $rot180(W^{l+1})^T$ represents rotating the weight $W^{l+1}$ by 180 degrees. Rotating by 180 degrees means that rows of a matrix are sorted in a reverse order, and elements in each row are also sorted in a reverse order. For example, for the matrix $W^{l+1}$ whose dimension is $H \times M$:

$$W^{l+1} = \begin{bmatrix} w_{11}^{l+1} & w_{12}^{l+1} & \cdots & w_{1M}^{l+1} \\ w_{21}^{l+1} & w_{22}^{l+1} & \cdots & w_{2M}^{l+1} \\ \vdots & \vdots & \ddots & \vdots \\ w_{H1}^{l+1} & w_{H2}^{l+1} & w_{H3}^{l+1} & w_{HM}^{l+1} \end{bmatrix}$$

$rot180(W^{l+1})$ obtained by rotating $W^{l+1}$ by 180 degrees is:

$$rot180(W^{l+1})=\begin{bmatrix} w_{HM}^{l+1} & w_{H(M-1)}^{l+1} & \cdots & w_{H1}^{l+1} \\ w_{(H-1)M}^{l+1} & w_{(H-1)(M-1)}^{l+1} & \cdots & w_{(H-1)1}^{l+1} \\ \vdots & \vdots & \ddots & \vdots \\ w_{1M}^{l+1} & w_{1(M-1)}^{l+1} & w_{12}^{l+1} & w_{11}^{l+1} \end{bmatrix}$$

It can be learned from the foregoing Formula (7) and Formula (8) that the gradient accumulation factor set corresponding to the $l$th layer may be obtained based on the gradient accumulation factor component set and the input data set of the $(l+1)$th layer. Therefore, the first communication apparatus may send the first information to the second communication apparatus. The first information indicates the gradient accumulation factor component set corresponding to each layer of the intelligent model and the input data set of each layer that are obtained by performing model training by the first communication apparatus. After receiving the first information, the second communication apparatus may determine, according to the foregoing Formula (7) or Formula (8), the gradient accumulation factor set corresponding to each layer based on the gradient accumulation factor component set of each layer and the output data set of each layer (that is, an input data set of a next layer), and then determine the gradient set corresponding to each layer according to Formula (2) or Formula (6). Optionally, the weight set corresponding to each layer may be further determined based on the gradient set corresponding to each layer, to determine the updated intelligent model.

In this implementation, overheads of indication using the first information is the same as overheads of indicating input data of each layer and a corresponding gradient accumulation factor set by the first information. Compared with feeding back a gradient set, transmission overheads can be reduced, and resource utilization can be improved.

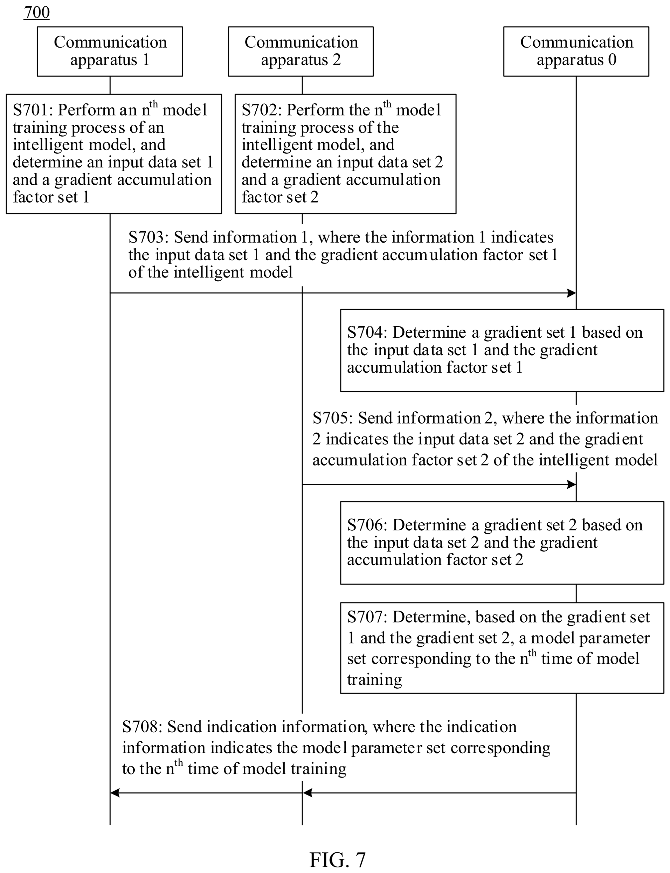

FIG. 7 is a schematic flowchart of a communication method 700 according to an embodiment of this application. In the method 700, a communication apparatus 0 to a communication apparatus 2 may correspond to the communication apparatus 0 to the communication apparatus 2 shown in FIG. 5. The communication apparatus 0 and the communication apparatus 2 perform model training in a federated learning manner. The communication apparatus 0 serves as a central apparatus and provides model parameters for the communication apparatus 1 and the communication apparatus 2 that serve as distributed apparatuses. The communication apparatus 1 and the communication apparatus 2 separately perform model training based on local data and feed back training results to the communication apparatus 0 by using the method shown in FIG. 6. After combining the training results of the communication apparatus 1 and the communication apparatus 2, the communication apparatus 0 provides updated model parameters for the communication apparatus 1 and the communication apparatus 2. The communication apparatus 1 and the communication apparatus 2 determine an updated model based on an updated model parameter set, and perform next model training. The method may further include another communication apparatus. In the method 700, three communication apparatuses are used as an example for description. The method includes but is not limited to the following steps.

S701: The communication apparatus 1 performs an $n$th model training process of an intelligent model, and determines an input data set 1 and a gradient accumulation factor set 1.

The communication apparatus 1 may receive, from the communication apparatus 0, a corresponding model parameter set indicating an $(n-1)$th time of model training, and determine an updated intelligent model based on the model parameter set corresponding to the $(n-1)$th time of model training. For example, the model parameter set may be obtained by combining, by the communication apparatus 0, results of the $(n-1)$th time of model training performed by the communication apparatus 0 and the communication apparatus 1. If n=1, the indication information may indicate an initial model parameter set of the intelligent model. The model parameter set may be a gradient set or a weight set of the intelligent model.

After determining the updated intelligent model based on the model parameter set corresponding to the $(n-1)$th time of model training, the communication apparatus 1 performs the $n$th model training process by using the updated intelligent model, to obtain the input data set 1 and the gradient accumulation factor set 1. The input data set 1 includes an input data set that corresponds to each layer of the intelligent model and that is obtained in current model training, and the gradient accumulation factor set 1 includes a gradient accumulation factor set that corresponds to each layer of the intelligent model and that is obtained in current model training. For a specific determining manner, refer to the description in the embodiment shown in FIG. 6. Details are not described herein again.

S702: The communication apparatus 2 performs the $n$th model training process of the intelligent model, and determines an input data set 2 and a gradient accumulation factor set 2.

The communication apparatus 2 determines the input data set 2 and the gradient accumulation factor 2 in a manner the same as that of the communication apparatus 1 in S701.

It should be understood that a sequence of performing the steps in the embodiment shown in FIG. 7 by the communication apparatuses is not limited in this application. A sequence of the steps is determined by a logical relationship between the steps. In specific implementation, a sequence of the steps may be changed when there is no logic conflict. For example, S702 may be performed before S701, and subsequent S705 may be performed before S703, or S704 may be performed after S705.

S703: The communication apparatus 1 sends information 1 to the communication apparatus 0, where the information 1 indicates the input data set 1 and the gradient accumulation factor set 1 of the intelligent model.

Correspondingly, the communication apparatus 0 receives the information 1 from the communication apparatus 1.

S704: The communication apparatus 0 determines a gradient set 1 based on the input data set 1 and the gradient accumulation factor set 1.

The communication apparatus 0 may determine the gradient set 1 based on a type of each layer (for example, a fully connected layer or a convolution layer) of the intelligent model and according to Formula (2) or Formula (6). The gradient set 1 includes a gradient set corresponding to each layer determined by the communication apparatus 1 by performing the $n^{th}$ time of model training.

S705: The communication apparatus 2 sends information 2 to the communication apparatus 0, where the information 2 indicates the input data set 2 and the gradient accumulation factor set 2 of the intelligent model.

Correspondingly, the communication apparatus 0 receives the information 2 from the communication apparatus 2.

S706: The communication apparatus 0 determines a gradient set 2 based on the input data set 2 and the gradient accumulation factor set 2.

Similarly, S705 and S706 may be implemented with reference to S703 and S704.

S707: The communication apparatus 0 determines, based on the gradient set 1 and the gradient set 2, a model parameter set corresponding to the $n^{th}$ time of model training.

After the communication apparatus 0 separately obtains, based on the information 1 and the information 2, the gradient set 1 and the gradient set 2 that are determined by the communication apparatus 1 and the communication apparatus 2 by performing the $n^{th}$ time of model training, the communication apparatus 0 combines the training results of the two apparatuses, to obtain the model parameter set corresponding to the $n^{th}$ time of model training.

S708: The communication apparatus 0 sends indication information to the communication apparatus 1 and the communication apparatus 2, where the indication information indicates the model parameter set corresponding to the $n^{th}$ time of model training.

Correspondingly, the communication apparatus 1 and the communication apparatus 2 receive the indication information from the communication apparatus 0, determine an updated intelligent model based on the model parameter set corresponding to the $n^{th}$ time of model training, and then perform an $(n+1)^{th}$ time of model training based on the updated intelligent model. After determining that a model training completion condition is met, the communication apparatus 0 notifies the communication apparatus 1 and the communication apparatus 2 to stop model training. Each communication apparatus obtains a trained intelligent model, and the intelligent model may be used for inference.

For example, multiple communication apparatuses perform training of an intelligent model in a federated learning manner. The multiple communication apparatuses may include an access network node and a terminal, or the multiple communication apparatuses may be communication apparatuses in Internet of Things, Internet of Vehicles, or Industrial Internet of Things. Federated learning can be used to improve diversity of model training data and sharing of a processing capability of the apparatus.

After model training, the intelligent model may be used to perform a physical layer inference task. For example, the intelligent model is used to infer compressed CSI based on CSI. The access network node and multiple terminals may jointly train the intelligent model, and the multiple terminals may perform CSI compression based on the intelligent model, to feed back compressed CSI to the access network node. Alternatively, the intelligent model may be used to execute an application layer inference task after model training. For example, the intelligent model is used for speech recognition. If application layers of multiple terminals need to execute a speech recognition task, the access network node may configure the multiple terminals to jointly train the intelligent model. After the training is completed, the multiple terminals separately execute the speech recognition inference task by using the intelligent model.

According to the solution provided in this application, when multiple communication apparatuses jointly perform model training, and a gradient set or a weight set of a neuron layer needs to be transferred between communication apparatuses, an input data set and a corresponding gradient accumulation factor set that are obtained through decomposing the gradient set corresponding to the neuron layer may be transmitted, and a receiving apparatus may determine the gradient set or the weight set based on the input data set and the gradient accumulation factor set. Transmission overheads can be reduced and resource utilization can be improved by using this manner of model parameter transmission.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

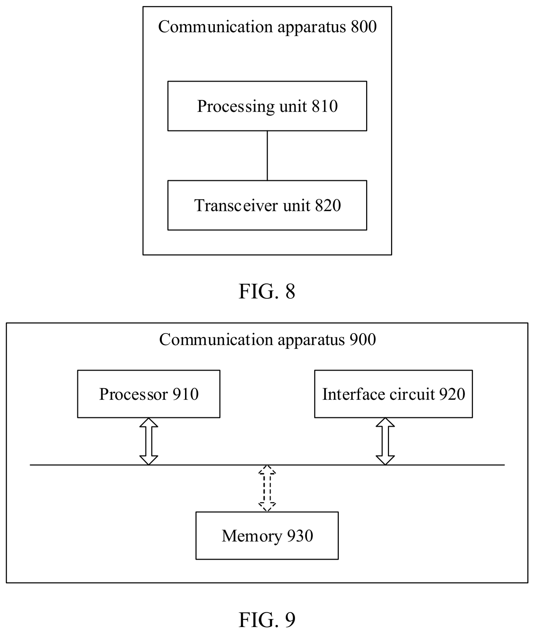

FIG. 8 to FIG. 10 are diagrams of structures of possible communication apparatuses according to embodiments of this application. The communication apparatuses may be configured to implement functions of the communication apparatus in the foregoing method embodiments, and therefore can also implement beneficial effects of the foregoing method embodiments. In this embodiment of this application, when the communication apparatus is configured to implement the functions of the communication apparatus in the foregoing method embodiments, the communication apparatus may be one of the terminals 120a to 120j shown in FIG. 1. Alternatively, the communication apparatus may be the RAN node 110a or 110b shown in FIG. 1, or may be a module (for example, a chip or a chip system) used in a terminal or a network device.

The communication apparatus 800 shown in FIG. 8 includes a transceiver unit 820, and the transceiver unit 820 may be configured to receive or send information. The communication apparatus 800 may further include a processing unit 810, and the processing unit 810 may be configured to process instructions or data, to implement corresponding operations.

It should be further understood that when the communication apparatus 800 is a chip configured in (or used in) a communication device, the transceiver unit 820 in the communication apparatus 800 may be an input/output interface or a circuit in the chip, and the processing unit 810 in the communication apparatus 800 may be a processor in the chip.

Optionally, the communication apparatus 800 may further include a storage unit. The storage unit may be configured to store instructions or data. The processing unit 810 may execute the instructions or the data stored in the storage unit, to cause the communication apparatus to implement a corresponding operation.

The communication apparatus 800 may be configured to implement a function of the second communication apparatus or the communication apparatus 0 in the foregoing method embodiments. When the communication apparatus 800 is configured to implement a function of the second communication apparatus or the communication apparatus 0 in the foregoing method embodiments, the transceiver unit 820 is configured to receive first information, where the first information indicates an input data set of an $l^{th}$ layer of an intelligent model and a gradient accumulation factor set corresponding to the $l^{th}$ layer, and $l$ is a positive integer. The processing unit 810 is configured to determine, based on the input data set of the $l^{th}$ layer and the gradient accumulation factor set corresponding to the $l^{th}$ layer, a gradient set corresponding to the $l^{th}$ layer, where one gradient accumulation factor in the gradient accumulation factor set is used to determine multiple gradients in the gradient set, and the gradient set is used to determine the intelligent model.

The communication apparatus 800 may be configured to implement a function of the first communication apparatus, the communication apparatus 1, or the communication apparatus 2 in the foregoing method embodiments. When the communication apparatus 800 is configured to implement a function of the first communication apparatus, the communication apparatus 1, or the communication apparatus 2 in the foregoing method embodiments, the processing unit 810 is configured to perform a model training process of an intelligent model, and determine an input data set of an $l^{th}$ layer of the intelligent model and a gradient accumulation factor set corresponding to the $l^{th}$ layer, where $l$ is a positive integer. The transceiver unit 820 is configured to send first information, where the first information indicates the input data set of the $l^{th}$ layer and the gradient accumulation factor set corresponding to the $l^{th}$ layer, and one gradient accumulation factor in the gradient accumulation factor set is used to determine multiple gradients in a gradient set corresponding to l layers.

For more detailed descriptions of the processing unit 810 and the transceiver unit 820, refer to related descriptions in the foregoing method embodiments.

It should be understood that the transceiver unit 820 in the communication apparatus 800 may be implemented by using a transceiver, a transceiver circuit, an input/output interface, or a pin. When the transceiver unit 820 is a transceiver, the transceiver may include a receiver and/or a transmitter. The processing unit 810 in the communication apparatus 800 may be implemented by using at least one processor. The processing unit 810 in the communication apparatus 800 may alternatively be implemented by using at least one logic circuit. Optionally, the communication apparatus 800 further includes a storage unit, and the storage unit may be implemented by using a memory.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data required by the processor 910 to run instructions, or store data generated after the processor 910 runs instructions.

In an implementation, the memory 930 may alternatively be integrated into the processor 910, or may be independent of the processor 910.

When the communication apparatus 900 is configured to implement the method in the foregoing method embodiments, the processor 910 is configured to implement functions of the processing unit 810, and the interface circuit 920 is configured to implement functions of the transceiver unit 820.

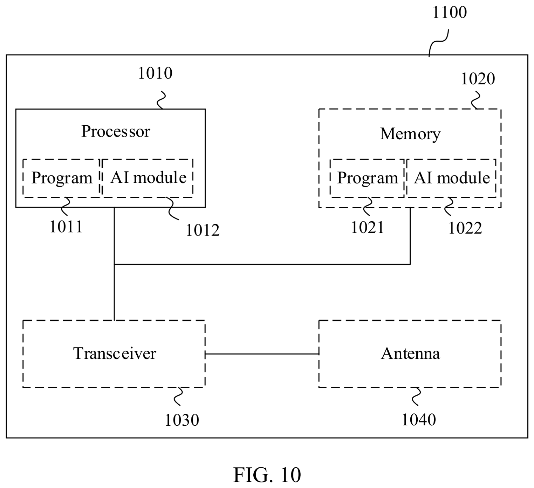

FIG. 10 is another diagram of a structure of a communication apparatus 1100. It may be understood that the communication apparatus 1100 includes components in necessary forms such as module, unit, element, circuit, or interface, and the components are properly configured together to implement functions of the first communication apparatus or the second communication apparatus in the foregoing embodiments of this application. The communication apparatus 1100 may be a RAN node, a terminal, a core network device, or another network device in FIG. 1, or may be a component (for example, a chip) in these devices, and is configured to implement the method described in the foregoing method embodiments. The communication apparatus 1100 includes one or more processors 1010. The processor 1010 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 1010 may include a program 1011 (which may also be referred to as code or instructions in some cases), and the program 1011 may be run on the processor 1010, to cause the communication apparatus 1100 to perform the method described in the foregoing embodiments. In another possible design, the communication apparatus 1100 may include a circuit (not shown in FIG. 10). The circuit is configured to implement a function of receiving a signal and/or sending a signal by the communication apparatus in the foregoing embodiments.

Optionally, the communication apparatus 1100 may include one or more memories 1020, and a program 1021 (which may also be referred to as code or instructions in some cases) is stored in the memory 1020. The program 1021 may be run on the processor 1010, to cause the communication apparatus 1100 to perform the method described in the foregoing method embodiments.

Optionally, the processor 1010 and/or the memory 1020 may include an AI module 1012 and an AI module 1022, and the AI module is configured to implement an AI-related function. The AI module may be implemented by using software, hardware, or a combination of software and hardware. For example, the AI module may include an RIC module. For example, the AI module may be a near-real-time RIC or a non-real-time RIC.

Optionally, the processor 1010 and/or the memory 1020 may further store data. The processor and the memory may be separately disposed, or may be integrated together.

Optionally, the communication apparatus 1100 may further include a transceiver 1030 and/or an antenna 1040. The processor 1010 may also be referred to as a processing unit in some cases, and controls the communication apparatus (for example, the RAN node or the terminal). The transceiver 1030 may also be referred to as a transceiver unit, a transceiver machine, a transceiver circuit, a transceiver, or the like in some cases, and is configured to implement receiving and sending functions of the communication apparatus via the antenna 1040.

When the communication apparatus is a chip used in a terminal, the chip may implement functions related to the terminal in the foregoing method embodiments. The chip receives information/data from another module (for example, a radio frequency module or an antenna) in the terminal, where the information/data may be sent by a network device to the terminal; or the chip sends information/data to another module (for example, a radio frequency module or an antenna) in the terminal, where the information/data may be sent by the terminal device to a network device.

When the communication apparatus is a module used in a network device, the module may implement functions related to the network device in the foregoing method embodiments. The module receives information/data from another module (for example, a radio frequency module or an antenna) in the network device, where the information/data may be sent by a terminal to the network device; or the module sends information/data to another module (for example, a radio frequency module or an antenna) in the network device, where the information/data may be sent by the network device to a terminal. The module in the network device herein may be a chip of the network device, or may be a DU or another module (for example, a CU or a radio unit (radio unit, RU)). The RU may include a remote radio unit (remote radio unit, RRU). The DU may be an O-DU in an O-RAN architecture, the CU may be an O-CU in the O-RAN architecture, and the RU may be an O-RU in the O-RAN architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

According to the methods provided in embodiments of this application, embodiments of this application further provide a computer program product. The computer program product includes computer program code. When the computer program code is executed by one or more processors, an apparatus including the processor is caused to perform the method in the foregoing method embodiments.

All or some of the foregoing embodiments may be implemented by using software, hardware, firmware, or any combination thereof. When software is used for implementation, all or some of the embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus.

According to the methods provided in embodiments of this application, embodiments of this application further provide a computer-readable storage medium. The computer-readable storage medium stores the computer programs or instructions. When the computer programs or instructions are run by one or more processors, an apparatus including the processor is caused to perform the method in the foregoing method embodiments.

The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

According to the methods provided in embodiments of this application, embodiments of this application further provide a communication system, including one or more terminals described above. The system may further include one or more network devices described above.

In several embodiments provided in this application, it should be understood that the disclosed system, apparatus, and method may be implemented in other manners. For example, the described apparatuses are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of the embodiments.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A model training method, comprising:

   receiving first information, wherein the first information indicates an input data set of an $l^{th}$ layer of an intelligent model and a gradient accumulation factor set corresponding to the $l^{th}$ layer, and $l$ is a positive integer; and
   determining, based on the input data set of the $l^{th}$ layer and the gradient accumulation factor set corresponding to the $l^{th}$ layer, a gradient set corresponding to the $l^{th}$ layer, wherein one gradient accumulation factor in the gradient accumulation factor set is used to determine multiple gradients in the gradient set, and the gradient set is used to determine the intelligent model.

2. The method according to claim 1, wherein the method further comprises:

determining a weight set of the intelligent model based on the gradient set, wherein the gradient set comprises a gradient corresponding to each weight in the weight set; and

determining an updated intelligent model based on the weight set.

3. The method according to claim 1 or 2, wherein the $l^{th}$ layer is a fully connected layer, the $l^{th}$ layer comprises N nodes, an $(l+1)^{th}$ layer of the intelligent model comprises M nodes, and N and M are positive integers greater than 2; and the input data set of the $l^{th}$ layer comprises N pieces of input data corresponding to the N nodes, and the gradient accumulation factor set corresponding to the $l^{th}$ layer comprises M gradient accumulation factors corresponding to the M nodes, wherein the gradient set comprises T gradients, and T is a product of N and M.

4. The method according to claim 3, wherein determining, based on the input data set of the $l^{th}$ layer and the gradient accumulation factor set corresponding to the $l^{th}$ layer, the gradient set corresponding to the l^{th} layer comprises: determining the T gradients in the gradient set based on input data of each node in the N nodes and a gradient accumulation factor corresponding to each node in the M nodes, wherein a gradient $g_{mn}$ in the T gradients is a product of input data of an $n^{th}$ node in the N nodes and a gradient accumulation factor corresponding to an $m^{th}$ node in the M nodes, n is a positive integer less than or equal to N, and m is a positive integer less than or equal to M.

5. The method according to claim 1 or 2, wherein

the input data set of the $l^{th}$ layer comprises input data of P channels;

the $l^{th}$ layer comprises Q convolution kernels, the Q convolution kernels correspond to Q channels of output data of the $l^{th}$ layer, and the gradient accumulation factor set corresponding to the $l^{th}$ layer comprises Q gradient accumulation factor subsets corresponding to the Q convolution kernels; and

the gradient set comprises R gradient subsets, the R gradient subsets comprise P gradient subsets corresponding to each of the Q convolution kernels, the P gradient subsets corresponding to each convolution kernel correspond to the P channels, P and Q are positive integers, and R is a product of Q and P.

6. The method according to claim 5, wherein determining the gradient set based on the input data set of the $l^{th}$ layer and the gradient accumulation factor set corresponding to the $l^{th}$ layer comprises: determining, by performing a convolution operation, the R gradient subsets in the gradient set based on input data of each of the P channels and a gradient accumulation factor subset corresponding to each of the Q convolution kernels, wherein a gradient subset $G_{qp}$ in the R gradient subsets is obtained, by performing a convolution operation, based on a $p^{th}$ channel in the P channels and a gradient accumulation factor corresponding to a $q^{th}$ convolution kernel in the Q convolution kernels.

7. The method according to any one of claims 1 to 6, wherein the method further comprises: sending the gradient set, wherein the gradient set is used to determine the intelligent model.

8. A model training method, comprising:

performing a model training process of an intelligent model, and determining an input data set of an $l^{th}$ layer of the intelligent model and a gradient accumulation factor set corresponding to the $l^{th}$ layer, wherein $l$ is a positive integer; and

sending first information, wherein the first information indicates the input data set of the $l^{th}$ layer and the gradient accumulation factor set corresponding to the $l^{th}$ layer, and one gradient accumulation factor in the gradient accumulation factor set is used to determine multiple gradients in a gradient set corresponding to $l$ layers.

9. The method according to claim 8, wherein determining the gradient accumulation factor set corresponding to the $l^{th}$ layer of the intelligent model comprises: determining, based on a weight set of an $(l+1)^{th}$ layer of the intelligent model, a gradient accumulation factor set corresponding to the $(l+1)^{th}$ layer, and an output data set of the $l^{th}$ layer, the gradient accumulation factor set corresponding to the $l^{th}$ layer.

10. The method according to claim 9, wherein the intelligent model comprises L layers, $l$ is less than or equal to L, and determining the gradient accumulation factor set corresponding to the $l^{th}$ layer of the intelligent model comprises: if $l$ is equal to L, determining, based on an output data set and a label set of an $L^{th}$ layer, a gradient accumulation factor set corresponding to the $L^{th}$ layer, wherein the label set is used to determine a weight set of the intelligent model.

11. The method according to claim 9 or 10, wherein the $l^{th}$ layer is a fully connected layer, the $l^{th}$ layer comprises N nodes, the $(l+1)^{th}$ layer of the intelligent model comprises M nodes, and N and M are positive integers greater than 2; and the input data set of the $l^{th}$ layer comprises N pieces of input data corresponding to the N nodes, and the gradient accumulation factor set corresponding to the $l^{th}$ layer comprises M gradient accumulation factors corresponding to the M nodes, wherein the gradient set comprises T gradients, and T is a product of N and M.

12. The method according to claim 11, wherein determining, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer comprises:
determining, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a multiplication operation.

13. The method according to claim 9 or 10, wherein

the input data set of the $l^{th}$ layer comprises input data of P channels;
the $l^{th}$ layer comprises Q convolution kernels, the Q convolution kernels correspond to Q channels of output data of the $l^{th}$ layer, and the gradient accumulation factor set corresponding to the $l^{th}$ layer comprises Q gradient accumulation factor subsets corresponding to the Q convolution kernels; and
the gradient set comprises R gradient subsets, the R gradient subsets comprise P gradient subsets corresponding to each of the Q convolution kernels, the P gradient subsets corresponding to each convolution kernel correspond to the P channels, and R is a product of Q and P.

14. The method according to claim 13, wherein determining, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer comprises:
determining, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a convolution operation.

15. A model training apparatus, comprising:

a transceiver unit, configured to receive first information, wherein the first information indicates an input data set of an $l^{th}$ layer of an intelligent model and a gradient accumulation factor set corresponding to the $l^{th}$ layer, and $l$ is a positive integer; and
a processing unit, configured to determine, based on the input data set of the $l^{th}$ layer and the gradient accumulation factor set corresponding to the $l^{th}$ layer, a gradient set corresponding to the $l^{th}$ layer, wherein one gradient accumulation factor in the gradient accumulation factor set is used to determine multiple gradients in the gradient set, and the gradient set is used to determine the intelligent model.

16. The apparatus according to claim 15, wherein the processing unit is further configured to:

determine a weight set of the intelligent model based on the gradient set, wherein the gradient set comprises a gradient corresponding to each weight in the weight set; and
determine an updated intelligent model based on the weight set.

17. The apparatus according to claim 15 or 16, wherein the $l^{th}$ layer is a fully connected layer, the $l^{th}$ layer comprises N nodes, an $(l+1)^{th}$ layer of the intelligent model comprises M nodes, and N and M are positive integers greater than 2; and
the input data set of the $l^{th}$ layer comprises N pieces of input data corresponding to the N nodes, and the gradient accumulation factor set corresponding to the $l^{th}$ layer comprises M gradient accumulation factors corresponding to the M nodes, wherein the gradient set comprises T gradients, and T is a product of N and M.

18. The apparatus according to claim 17, wherein the processing unit is specifically configured to determine the T gradients in the gradient set based on input data of each node in the N nodes and a gradient accumulation factor corresponding to each node in the M nodes, wherein a gradient $g_{mn}$ in the T gradients is a product of input data of an $n^{th}$ node in the N nodes and a gradient accumulation factor corresponding to an $m^{th}$ node in the M nodes, n is a positive integer less than or equal to N, and m is a positive integer less than or equal to M.

**19.** The apparatus according to claim 15 or 16, wherein

the input data set of the $l^{th}$ layer comprises input data of P channels;
the $l^{th}$ layer comprises Q convolution kernels, the Q convolution kernels correspond to Q channels of output data of the $l^{th}$ layer, and the gradient accumulation factor set corresponding to the $l^{th}$ layer comprises Q gradient accumulation factor subsets corresponding to the Q convolution kernels; and
the gradient set comprises R gradient subsets, the R gradient subsets comprise P gradient subsets corresponding to each of the Q convolution kernels, the P gradient subsets corresponding to each convolution kernel correspond to the P channels, and R is a product of Q and P.

**20.** The apparatus according to claim 19, wherein the processing unit is specifically configured to determine, by performing a convolution operation, the R gradient subsets in the gradient set based on input data of each of the P channels and a gradient accumulation factor subset corresponding to each of the Q convolution kernels, wherein a gradient subset $G_{qp}$ in the R gradient subsets is obtained, by performing a convolution operation, based on a $p^{th}$ channel in the P channels and a gradient accumulation factor corresponding to a $q^{th}$ convolution kernel in the Q convolution kernels.

**21.** The apparatus according to any one of claims 15 to 20, wherein the transceiver unit is further configured to send the gradient set, wherein the gradient set is used to determine the intelligent model.

**22.** A model training apparatus, comprising:

a processing unit, configured to perform a model training process of an intelligent model, and determine an input data set of an $l^{th}$ layer of the intelligent model and a gradient accumulation factor set corresponding to the $l^{th}$ layer, wherein $l$ is a positive integer; and
a transceiver unit, configured to send first information, wherein the first information indicates the input data set of the $l^{th}$ layer and the gradient accumulation factor set corresponding to the $l^{th}$ layer, and one gradient accumulation factor in the gradient accumulation factor set is used to determine multiple gradients in a gradient set corresponding to $l$ layers.

**23.** The apparatus according to claim 22, wherein the processing unit is specifically configured to determine, based on a weight set of an $(l+1)^{th}$ layer of the intelligent model, a gradient accumulation factor set corresponding to the $(l+1)^{th}$ layer, and an output data set of the $l^{th}$ layer, the gradient accumulation factor set corresponding to the $l^{th}$ layer.

**24.** The apparatus according to claim 23, wherein the intelligent model comprises L layers, $l$ is less than or equal to L, and if $l$ is equal to L, the processing unit is specifically configured to determine, based on an output data set and a label set of an $L^{th}$ layer, a gradient accumulation factor set corresponding to the $L^{th}$ layer, wherein the label set is used to determine a weight set of the intelligent model.

**25.** The apparatus according to claim 23 or 24, wherein the $l^{th}$ layer is a fully connected layer, the $l^{th}$ layer comprises N nodes, the $(l+1)^{th}$ layer of the intelligent model comprises M nodes, and N and M are positive integers greater than 2; and
the input data set of the $l^{th}$ layer comprises N pieces of input data corresponding to the N nodes, and the gradient accumulation factor set corresponding to the $l^{th}$ layer comprises M gradient accumulation factors corresponding to the M nodes, wherein the gradient set comprises T gradients, and T is a product of N and M.

**26.** The apparatus according to claim 25, wherein the processing unit is specifically configured to determine, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a multiplication operation.

**27.** The apparatus according to claim 23 or 24, wherein

the input data set of the $l^{th}$ layer comprises input data of P channels;
the $l^{th}$ layer comprises Q convolution kernels, the Q convolution kernels correspond to Q channels of output data of the $l^{th}$ layer, and the gradient accumulation factor set corresponding to the $l^{th}$ layer comprises Q gradient accumulation factor subsets corresponding to the Q convolution kernels; and
the gradient set comprises R gradient subsets, the R gradient subsets comprise P gradient subsets corresponding to each of the Q convolution kernels, the P gradient subsets corresponding to each convolution kernel correspond to the P channels, and R is a product of Q and P.

28. The apparatus according to claim 27, wherein the processing unit is specifically configured to determine, based on the weight set of the $(l+1)^{th}$ layer of the intelligent model, the gradient accumulation factor set corresponding to the $(l+1)^{th}$ layer, and the output data set of the $l^{th}$ layer, the gradient accumulation factor set corresponding to the $l^{th}$ layer by using a partial derivative operation and/or a convolution operation.

29. A communication apparatus, comprising at least one processor, wherein
the at least one processor is configured to execute a program or instructions stored in a memory, to cause the communication device to implement the method according to any one of claims 1 to 7, or implement the method according to any one of claims 8 to 14.

30. The communication apparatus according to claim 29, wherein the communication apparatus comprises the memory.

31. A computer-readable storage medium, wherein the computer-readable storage medium stores a computer program or instructions, and when the computer program or the instructions are run on a computer, the computer is caused to perform the method according to any one of claims 1 to 7, or the method according to any one of claims 8 to 14.

32. A communication system, comprising the apparatus according to any one of claims 15 to 21 and/or the apparatus according to any one of claims 22 to 28.

33. A computer program product, wherein when the computer program product runs on a computer, the computer is caused to perform the method according to any one of claims 1 to 7, or the method according to any one of claims 8 to 14.

FIG. 1

EP 4 715 676 A1

FIG. 1A

FIG. 2

Input data

Channel 0

| 1 | −1 | 0 | 2 | 0 |
| −1 | −2 | 2 | 3 | 1 |
| 1 | 2 | −2 | 1 | 0 |
| 0 | −1 | −1 | −3 | 2 |
| 2 | 0 | 0 | 1 | −1 |

Channel 1

| 2 | 1 | 1 | −2 | 3 |
| −1 | 2 | −2 | 3 | 1 |
| −1 | 0 | 1 | −1 | 0 |
| 0 | −1 | −2 | −3 | 2 |
| 1 | 0 | 1 | 3 | −1 |

Channel 2

| 3 | −1 | 0 | −1 | 0 |
| −1 | 2 | 2 | 3 | −1 |
| −2 | 2 | −2 | −3 | 0 |
| 0 | −1 | 2 | −3 | 0 |
| 2 | 0 | 0 | 1 | −1 |

Convolution kernel *q*

Channel 0

| −1 | 1 | 2 |
| 1 | −1 | 3 |
| 0 | −1 | −2 |

Channel 1

| 0 | 1 | −2 |
| 3 | −2 | 2 |
| 0 | 0 | 1 |

Channel 2

| −2 | −2 | 0 |
| 1 | 0 | 3 |
| 1 | −1 | 1 |

7

−11

−1

Output data of the convolution kernel *q*

−5

FIG. 3

EP 4 715 676 A1

Basic data set (for example, channel H)

Training sample and label

Label y

Sample x

Network with four convolution layers

Network with four fully connected layers

Neural network $f_\theta(\cdot)$

$f_\theta(x)$

Label y

Loss function $L_0(f_\theta(x), y)$

Optimize a network weight $\theta$

Backpropagation optimization algorithm

FIG. 4

FIG. 5

600

First communication
apparatus

Second communication
apparatus

S601: Perform a model training process of an intelligent model, and determine an input data set of an $l^{th}$ layer of the intelligent model and a gradient accumulation factor set corresponding to the $l^{th}$ layer

S602: Send first information, where the first information indicates the input data set of the $l^{th}$ layer and the gradient accumulation factor set corresponding to the $l^{th}$ layer

S603: Determine, based on the input data set of the $l^{th}$ layer and the gradient accumulation factor set corresponding to the $l^{th}$ layer, a gradient set corresponding to the $l^{th}$ layer

FIG. 6

FIG. 6A

700

| Communication apparatus 1 | Communication apparatus 2 | Communication apparatus 0 |
|---|---|---|

S701: Perform an $n^{th}$ model training process of an intelligent model, and determine an input data set 1 and a gradient accumulation factor set 1

S702: Perform the $n^{th}$ model training process of the intelligent model, and determine an input data set 2 and a gradient accumulation factor set 2

S703: Send information 1, where the information 1 indicates the input data set 1 and the gradient accumulation factor set 1 of the intelligent model

S704: Determine a gradient set 1 based on the input data set 1 and the gradient accumulation factor set 1

S705: Send information 2, where the information 2 indicates the input data set 2 and the gradient accumulation factor set 2 of the intelligent model

S706: Determine a gradient set 2 based on the input data set 2 and the gradient accumulation factor set 2

S707: Determine, based on the gradient set 1 and the gradient set 2, a model parameter set corresponding to the $n^{th}$ time of model training

S708: Send indication information, where the indication information indicates the model parameter set corresponding to the $n^{th}$ time of model training

FIG. 7

Communication apparatus 800

Processing unit 810

Transceiver unit 820

FIG. 8

Communication apparatus 900

Processor 910

Interface circuit 920

Memory 930

FIG. 9

1100

| 1010 | 1020 |
| --- | --- |
| Processor | Memory |
| Program \| AI module | Program \| AI module |
| 1011 1012 | 1021 1022 |

| | | |
| --- | --- | --- |
| Transceiver | | Antenna |
| 1030 | | 1040 |

FIG. 10

## INTERNATIONAL SEARCH REPORT

| International application No. |
| --- |
| **PCT/CN2023/104201** |

### A. CLASSIFICATION OF SUBJECT MATTER

G06N 3/084(2023.01)i

According to International Patent Classification (IPC) or to both national classification and IPC

### B. FIELDS SEARCHED

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

USTXT; VEN; CNABS; CNTXT; EPTXT; WOTXT; CNKI; IEEE: 模型, 网络, 训练, 层, 输入, 数据, 梯度, 累积, 因子, 集合, 分开, 拆分, 传输, model, network, train, layer, input, data, gradient, cumulate, factor, aggregation, separation, split, transmit

### C. DOCUMENTS CONSIDERED TO BE RELEVANT

| Category* | Citation of document, with indication, where appropriate, of the relevant passages | Relevant to claim No. |
| --- | --- | --- |
| A | CN 115600681 A (HUAWEI TECHNOLOGIES CO., LTD.) 13 January 2023 (2023-01-13) description, paragraphs 5-43 | 1-33 |
| A | CN 112598127 A (BAIDU ONLINE NETWORK TECHNOLOGY (BEIJING) CO., LTD.) 02 April 2021 (2021-04-02) description, paragraphs 6-11 | 1-33 |
| A | CN 109978177 A (TENCENT TECHNOLOGY (SHENZHEN) CO., LTD.) 05 July 2019 (2019-07-05) entire document | 1-33 |
| A | CN 110378480 A (PING AN TECHNOLOGY (SHENZHEN) CO., LTD.) 25 October 2019 (2019-10-25) entire document | 1-33 |
| A | CN 112001455 A (BEIJING BAIDU NETCOM SCIENCE AND TECHNOLOGY CO., LTD.) 27 November 2020 (2020-11-27) entire document | 1-33 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 March 2024** | **15 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/104201** |

**C. DOCUMENTS CONSIDERED TO BE RELEVANT**

| Category* | Citation of document, with indication, where appropriate, of the relevant passages | Relevant to claim No. |
|---|---|---|
| A | CN 112235384 A (TENCENT TECHNOLOGY (SHENZHEN) CO., LTD.) 15 January 2021 (2021-01-15) <br> entire document | 1-33 |
| A | CN 114638343 A (JINGDONG CITY (BEIJING) DIGITS TECHNOLOGY CO., LTD.) 17 June 2022 (2022-06-17) <br> entire document | 1-33 |
| A | US 10510003 B1 (CAPITAL ONE SERVICES, LLC) 17 December 2019 (2019-12-17) <br> entire document | 1-33 |
| A | 窦勇敢 等 (DOU, Yonggan et al.). "基于隐式随机梯度下降优化的联邦学习 (Federated Learning with Implicit Stochastic Gradient Descent Optimization)" <br> 智能系统学报 (*CAAI Transactions on Intelligent Systems*), <br> Vol. 17, No. 3, 31 May 2022 (2022-05-31), <br> ISSN: 1673-4785, <br> pages 488-495 | 1-33 |

Form PCT/ISA/210 (second sheet) (July 2022)

**INTERNATIONAL SEARCH REPORT**
Information on patent family members

International application No.

**PCT/CN2023/104201**

| Patent document cited in search report | | | Publication date (day/month/year) | Patent family member(s) | | | Publication date (day/month/year) |
|---|---|---|---|---|---|---|---|
| CN | 115600681 | A | 13 January 2023 | WO | 2023279967 | A1 | 12 January 2023 |
| CN | 112598127 | A | 02 April 2021 | CN | 112598127 | B | 25 July 2023 |
| CN | 109978177 | A | 05 July 2019 | CN | 109978177 | B | 23 June 2023 |
| CN | 110378480 | A | 25 October 2019 | WO | 2020248495 | A1 | 17 December 2020 |
| | | | | CN | 110378480 | B | 27 September 2022 |
| CN | 112001455 | A | 27 November 2020 | CN | 112001455 | B | 20 February 2024 |
| CN | 112235384 | A | 15 January 2021 | CN | 112235384 | B | 31 October 2023 |
| CN | 114638343 | A | 17 June 2022 | | None | | |
| US | 10510003 | B1 | 17 December 2019 | US | 10510002 | B1 | 17 December 2019 |
| | | | | US | 2021232925 | A1 | 29 July 2021 |
| | | | | US | 2020265296 | A1 | 20 August 2020 |
| | | | | US | 10990878 | B2 | 27 April 2021 |

Form PCT/ISA/210 (patent family annex) (July 2022)